Europäisches Patentamt

European Patent Office

Office européen des brevets

(19)

(11) EP 0 962 045 B1

(12) **EUROPÄISCHE PATENTSCHRIFT**

(45) Veröffentlichungstag und Bekanntmachung des Hinweises auf die Patenterteilung:
**11.06.2003 Patentblatt 2003/24**

(21) Anmeldenummer: **98908106.2**

(22) Anmeldetag: **20.02.1998**

(51) Int Cl.⁷: **H02P 21/00**

(86) Internationale Anmeldenummer:
**PCT/EP98/01002**

(87) Internationale Veröffentlichungsnummer:
**WO 98/037625 (27.08.1998 Gazette 1998/34)**

(54) **VERFAHREN UND VORRICHTUNG ZUR GEBERLOSEN ROTORLAGEMESSUNG BEI ASYNCHRONMASCHINEN MIT KURZSCHLUSSLÄUFER**

SENSORLESS ROTOR POSITION MEASUREMENT PROCESS AND DEVICE FOR INDUCTION MOTORS WITH A SHORT-CIRCUIT ROTOR

PROCEDE ET DISPOSITIF POUR MESURER SANS CAPTEURS LA POSITION DU ROTOR DANS DES MOTEURS ASYNCHRONES AVEC DES ROTORS EN COURT-CIRCUIT

(84) Benannte Vertragsstaaten:
**CH DE ES FR GB IT LI SE**

(30) Priorität: **20.02.1997 DE 19706799**

(43) Veröffentlichungstag der Anmeldung:
**08.12.1999 Patentblatt 1999/49**

(73) Patentinhaber:
• **Holtz, Joachim, Prof. Dr. Ing.**
**42119 Wuppertal (DE)**
• **Weg Automacao Ltda.**
**89256-900 Jaragua do Sul, SC (BR)**

(72) Erfinder:
• **JIANG, Jinsheng**
**Baumüller Nürnberg GmbH, Abt.**
**D-90482 Nürnberg (DE)**
• **HOLTZ, Joachim**
**D-42119 Wuppertal (DE)**

(74) Vertreter: **Hoffmann, Eckart, Dipl.-Ing.**
**Patentanwalt,**
**Bahnhofstrasse 103**
**82166 Gräfelfing (DE)**

(56) Entgegenhaltungen:
• **ZINGER D S ET AL: "A DIRECT FIELD-ORIENTED CONTROLLER FOR INDUCTION MOTOR DRIVES USING TAPPED STATOR WINDINGS" IEEE TRANSACTIONS ON POWER ELECTRONICS, Bd. 5, Nr. 4, 1.Oktober 1990, Seiten 446-453, XP000204292 in der Anmeldung erwähnt**
• **JANSEN P L ET AL: "TRANSDUCERLESS POSITION AND VELOCITY ESTIMATION IN INDUCTION AND SALIENT AC MACHINES" IEEE TRANSACTIONS ON INDUSTRY APPLICATIONS, Bd. 31, Nr. 2, 1.März 1995, Seiten 240-247, XP000513097 in der Anmeldung erwähnt**
• **M. SCHROEDL ET AL: "Sensorless Control of Reluctance Machines at Arbitrary Operating Conditions Including Standstill" IEEETRANSACTIONS ON POWER ELECTRONICS, Bd. 9, Nr. 2, März 1994, Seiten 225-231, XP002065015 in der Anmeldung erwähnt**
• **HOLTZ J: "PULSEWIDTH MODULATION FOR ELECTRONIC POWER CONVERSION" PROCEEDINGS OF THE IEEE, Bd. 82, Nr. 8, 1.August 1994, Seiten 1194-1214, XP000468124 in der Anmeldung erwähnt**

**EP 0 962 045 B1**

## Beschreibung

Für den Einsatz in drehzahl- und lagegeregelten Antrieben tragen Asynchronmaschinen üblicherweise einen auf der Welle montierten Lagegeber. Aus dem Gebersignal können die Istwerte der Lage und der Drehgeschwindigkeit zum Zwecke der Regelung abgeleitet werden. Zur Vermeidung der mit solch einem Geber verbundenen Kosten und Zuverlässigkeitseinbußen hat man Verfahren entwickelt, die die Messung der Lage und/oder der Drehgeschwindigkeit auch ohne Einsatz eines Gebers erlauben, wie in den nachstehenden Druckschriften offenbart:

[1] D.S. Zinger, F. Profumo, T.A. Lipo und D.W. Novotny, "*A Direct Field-Oriented Controller for Induction Motor Drives Using Tapped Stator Windings*", IEEE Transactions on Power Electronics, 1990, S. 446-453.

[2] M. Schroedl und P. Weinmeier, "*Sensorless Control of Reluctance Machines at Arbitrary Operating Conditions Including Standstill*", IEEE Transactions on Power Electronics, 1994, S. 225-231 and M. Schroedl, "*Sensorless Control of AC Machines at Low Speed and Standstill Based on the "INFORM" Method*", IEEE Industry Applications Society Annual Meeting, 1996, pp. 270-277.

[3] P.L. Jansen and R.D. Lorenz, "*Transducerless Position and Velocity Estimation in Induction and Salient AC Machines*", IEEE Transactions on Industry Applications, Vol. 31, No. 2, S. 240-247, 1995.

Das Verfahren [1] wertet die in jeder Asynchronmaschine auftretende Modulation der magnetischen Leitfähigkeit des Luftspalts durch die Rotornuten aus. Durch diese Modulation werden bei Drehung des Rotors in den Statorwicklungen Spannungen induziert, die näherungsweise die Frequenz $(N_r+1)\omega$ besitzen, wobei $N_r$ die Zahl der Rotornuten und $\omega$ die Drehfrequenz des Rotors ist. In der Regel bilden die von der modulierten Feldwelle rotatorisch induzierten Spannungen ein Nullsystem und verzerren daher die Statorströme nicht. Die Drehzahl, nicht aber die Lage des Rotors wird aus der Summe dieser induzierten Spannungen errechnet, die ihrerseits mitttels eines adaptiven Bandpaßfilters und einer PLL-Schaltung aus der kontinuierlich ermittelten Summe der Strangspannungen extrahiert wird. Weil die Amplituden der induzierten Spannungen mit der Drehfrequenz abnehmen, ist das Verfahren unterhalb etwa 3% der Bemessungsfrequenz nicht mehr einsetzbar.

Das Verfahren [2] beruht auf der Messung von Statorstromänderungen, die sich nach dem Anlegen von Spannungen an die Statorwicklung einstellen, wobei die Tatsache ausgenutzt wird, daß die Stromänderungen im Fall einer Reluktanzmaschine aufgrund einer räumlichen Unsymmetrie von der Rotorlage abhängen, während sie im Fall einer Asynchronmaschine aufgrund von Eisensättigungseffekten von der Feldlage abhängen. In beiden Fällen ist die Speisung der jeweiligen Maschine über einen Wechselrichter vorausgesetzt. Der Wechselrichter nimmt unter der Steuerung durch einen mit einem Spannungssollwert beaufschlagten Pulsweitenmodulator nacheinander verschiedene von mehreren möglichen Schaltzuständen an. Während vier dieser möglichen Schaltzustände werden jeweils zwei Tastwerte des Statorstroms gemessen und daraus die Stromänderung ermittelt.

Im Fall der Reluktanzmaschine ist der Rotor unbewickelt, so daß keine Streuinduktivitäten vorhanden sind. Die räumliche Unsymmetrie ergibt sich daraus, daß der Rotor eine magnetische Vorzugsrichtung aufweist, in welcher der magnetische Leitwert für den Hauptfluß und damit die Induktivität der Statorwicklung einen Höchstwert aufweisen, während sie in der dazu orthogonalen Querrichtung einen Kleinstwert besitzen. Aus den ermittelten vier Stromänderungswerten wird der Rotorlagewinkel errechnet.

Wie erwähnt, beruht bei der Reluktanzmaschine die Abhängigkeit der Stromänderungen von der Rotorlage auf der konstruktionsbedingten räumlichen Änderung des magnetischen Leitwerts für den Hauptfluß. Bei der Asynchronmaschine ergibt sich dagegen eine räumliche Änderung des magnetischen Leitwerts für den Hauptfluß durch den Effekt der Eisensättigung und der damit verbundenen magnetischen Unsymmetrie. Aus diesem Grund kann aus den ermittelten Stromänderungswerten zwar der Feldwinkel, nicht aber der Rotorlagewinkel errechnet werden. Die Anwendung des Verfahrens [2] bei Asynchronmaschinen ist ferner auf solche Maschinen beschränkt, bei denen die Sättigung der Eisenwege eine genügend ausgeprägte magnetische Unsymmetrie bewirkt. Für Normmotoren trifft dies in der Regel nicht zu. In jedem Fall ist die Anwendung im Feldschwächbereich nicht möglich.

Alternativ kann gemäß Verfahren [3] eine örtliche Veränderung des magnetischen Leitwerts auch durch eine besondere Konstruktion des Rotors erreicht werden. Hierzu werden beispielsweise längs des Rotorumfangs die Schlitzweiten der Rotornuten oder die Füllhöhe der Nuten mit Leitermaterial verändert. Dadurch wird der Rotor magnetisch oder elektrisch unsymmetrisch. Die Unsymmetrie wird durch ein höherfrequent (500 Hz - 2 kHz) umlaufendes Zusatzdrehfeld abgetastet und zum Zwecke der Erfassung von Lage und Drehfrequenz ausgewertet. Nachteilig ist hier die Notwendigkeit, eine speziell konstruierte Maschine einzusetzen, weiterhin die durch das Zusatzdrehfeld erzeugten Stromverzerrungen und Verluste. Die erreichbare Ortsauflösung und die Genauigkeit der Lagemessung sind gering.

Die bekannten Verfahren gestatten es nicht, die Rotorlage bei einem beliebigen Norm-Asynchronmotor zu bestimmen. Ein weiterer Nachteil aller bekannten Verfahren ist die grobe Diskretisierung des ermittelten Lagesignals.

Eine Rotorumdrehung wird im besten Fall durch eine Anzahl von Inkrementen dargestellt, die der Zahl der Rotornuten gleich ist. Daher ist es auch nicht möglich, die Rotorlage und die Drehfrequenz im Bereich geringer Drehfrequenz mit ausreichender Genauigkeit zu erfassen.

Aufgabe der Erfindung ist es, die genannten Nachteile des Standes der Technik zu beseitigen und ein Verfahren sowie eine Vorrichtung zu schaffen, die eine geberlose Lage- und Drehfrequenzerfassung an serienmäßigen Normmotoren, die an einem mittels eines Pulsweitenmodulators gesteuerten Wechselrichter betrieben werden, mit hoher Lageauflösung bei jeder Drehfrequenz einschließlich des Stillstands zu ermöglichen.

Diese Aufgabe wird durch ein Verfahren gemäß Patentanspruch 1 bzw. eine Vorrichtung gemäß Patentanspruch 15 gelöst. Vorteilhafte Ausgestaltungen und Weiterbildungen der Erfindung sind in den Unteransprüchen gekennzeichnet.

Die Erfindung nutzt die Abhängigkeit der totalen Streuinduktivitäten der Statorwicklung der Maschine von der Rotorlage, wie sie auch bei handelsüblichen Normmotoren auftritt. Wenn eine von den totalen Streuinduktivitäten der Statorwicklung abhängige Größe gemessen werden kann, läßt sich die Rotorlage aus der bekannten Abhängigkeit der totalen Streuinduktivitäten von der Rotorlage berechnen. Es hat sich gezeigt, daß die unter bestimmten Voraussetzungen gemessene Summe der Strangspannungen, d.h. die Nullspannung, eine solche von den totalen Streuinduktivitäten der Statorwicklung abhängige Größe darstellt. Aus der Veränderung der Rotorlage ist nachfolgend auch die Drehfrequenz zu bestimmen.

Anders als bei der kontinuierlichen Messung der rotatorisch induzierten Nullspannung nach dem Verfahren [1] wird die Nullspannung erfindungsgemäß nur kurzzeitig abgetastet, wobei es wesentlich ist, daß Maschine zuvor durch einen ausgewählten Schaltzustand in einen definierten transienten Zustand versetzt wird, dessen zeitliche Änderung während der kurzen Tastzeit von den totalen Steuinduktivitäten und von dem jeweiligen Schaltzustand bestimmt ist. Die Messung der Einflusses der totalen Steuinduktivitäten auf die Nullspannung, die nur während transienter Zustände möglich ist, kann bei jeder Drehfrequenz des Rotors einschließlich des Stillstands durchgeführt werden. Die rotatorisch induzierte Nullspannung verschwindet dagegen bei geringer Drehfrequenz und im Stillstand, wodurch das Verfahren [1] dann kein Ergebnis liefert.

Die Erfindung wird nachfolgend anhand von Ausführungsbeispielen unter Bezugnahme auf die Zeichnungen näher erläutert. Es zeigen:

Fig. 1     eine vereinfachte Darstellung zur Erläuterung der Abhängigkeit der totalen Streuinduktivität von der Rotorlage,

Fig. 2     die totalen Streuinduktivitäten (a) und die Differenzen der Nullspannungstastwerte (b) jeweils in Abhängigkeit von der Rotorlage $\delta$,

Fig. 3     ein Diagramm der Schaltzustandszeiger,

Fig. 4     Ersatzschaltbilder für zwei verschiedene Schaltzustände,

Fig. 5     ein Funktionsblockdiagramm eines Ausführungsbeispiels eines ersten Teiles einer Vorrichtung gemäß der Erfindung,

Fig. 6     ein Funktionsblockdiagramm eines anderen Ausführungsbeispiels des ersten Teiles einer Vorrichtung gemäß der Erfindung,

Fig. 7     ein Funktionsblockdiagramm eines Ausführungsbeispiels des zweiten Teils der Vorrichtung, der für die beiden Ausführungsbeispiele der Fig. 5 und 6 gleich ist,

Fig. 8     ein Blockdiagramm einer ersten Korrekturschaltungsanordnung, und

Fig. 9     ein Blockdiagramm einer alternativen zweiten Korrekturschaltungsanordnung.

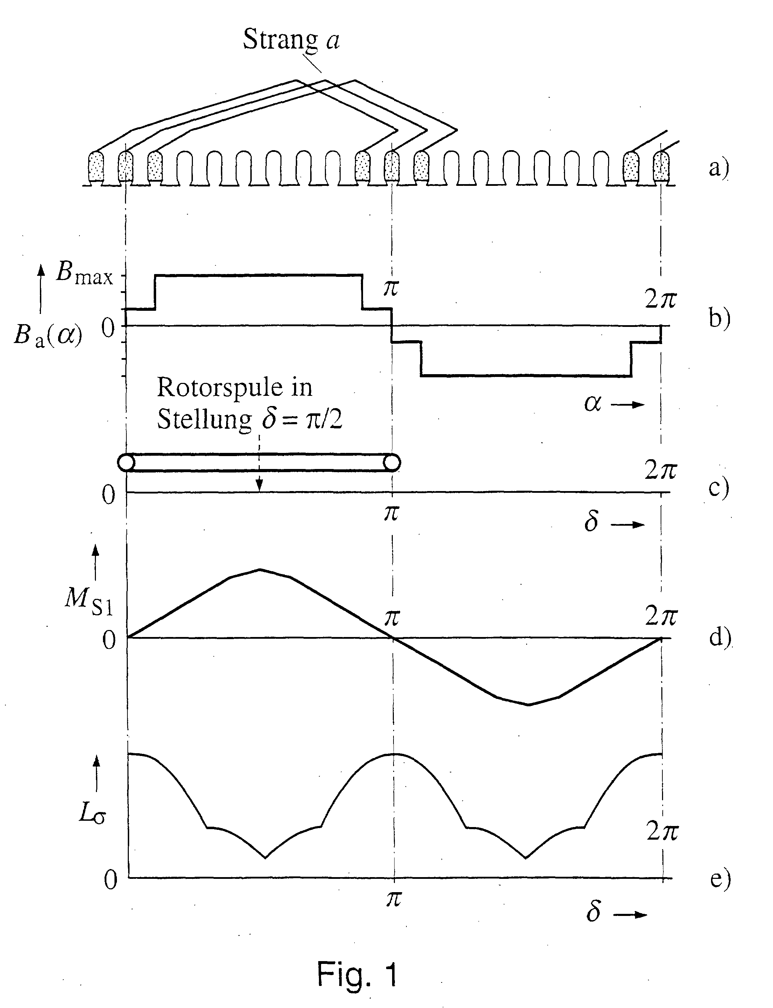

Anhand von Fig. 1 soll zunächst das Prinzip des erfindungsgemäßen Verfahrens unter Bezug auf eine vereinfachte Ausführung des Rotors mit nur zwei Rotorstäben erläutert werden. Die Rotorstäbe bilden eine einzelne Windung (Fig. 1c), die nach dem Prinzip des Kurzschlußläufers kurzgeschlossen ist. Im dreiphasig gewickelten Stator wird zunächst nur der Wicklungsstrang a betrachtet (Fig. 1a). Die totale Streuinduktivität des Strangs a bestimmt sich in bekannter Weise zu

$$L_\sigma = L_s(1 - M_{s1}^2/L_s L_1) \qquad (1)$$

Hierin ist $L_s$ die Induktivität des Statorstrangs a, $L_1$ die Induktivität der Rotorwindung, und $M_{s1}$ die rotorlageabhängige Gegeninduktivität beider Wicklungen. Fig. 1b zeigt die Komponente des Luftspaltflusses B($\alpha$) als Funktion der Umfangskoordinate $\alpha$ im Bereich eines Polpaars. Die Gegeninduktivität $M_{s1}$ ist durch die Verkettung der Rotorwindung mit dieser Flußkomponente definiert; sie läßt sich in der gezeigten Art durch Integration aus der Verteilung B($\alpha$) ermitteln. Fig. 1d zeigt die Abhängigkeit der resultierenden totalen Streuinduktivität $L_\sigma$ von der Rotorlage $\delta$ nach Gleichung (1).

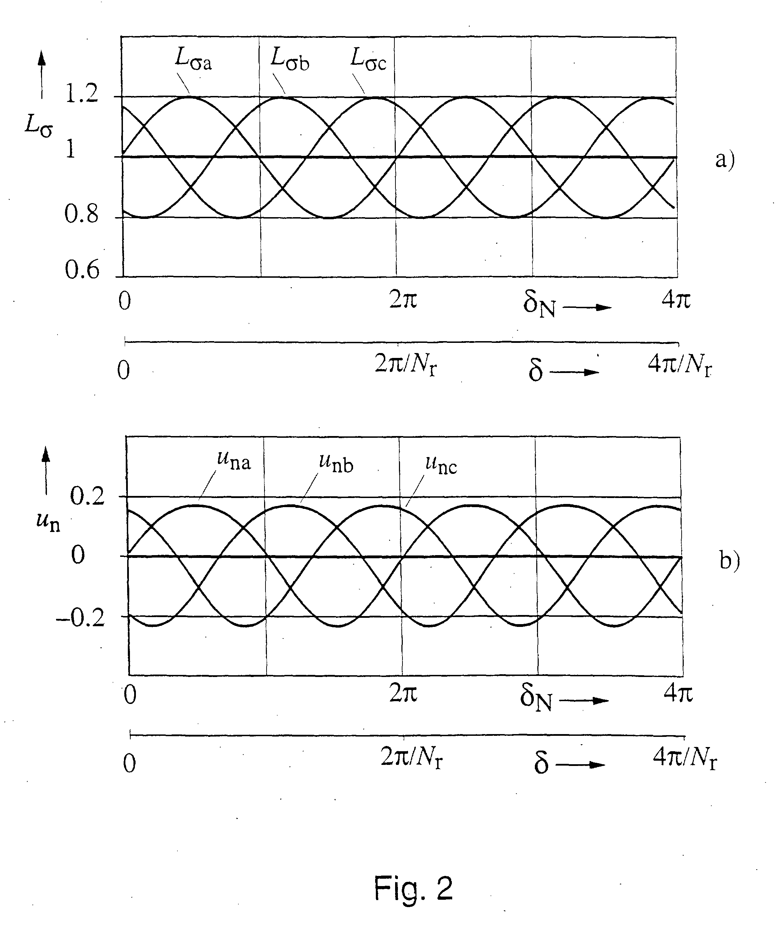

Im allgemeinen Fall besitzt der Rotor $N_r$ Rotorstäbe. Die totalen Streuinduktivitäten $L_{\sigma a}$, $L_{\sigma b}$ und $L_{\sigma c}$ der drei Statorwicklungsstränge a, b und c werden dann ähnlich wie in Gleichung (1) durch quadratische Funktionen der Gegeninduktivitäten zwischen allen Rotorstäben und den Statorsträngen beschrieben. Die totalen Streuinduktivitäten sind in Abhängigkeit der Rotorlage $\delta$ in Fig. 2a aufgetragen. Wegen der endlichen Nutbreiten in Stator und Rotor und unter dem Einfluß von Nutenschrägungen sind die an einer ausgeführten Maschine meßbaren Verläufe so verschliffen, daß sich die in der Zeichnung dargestellten genähert sinusförmigen Verläufe ergeben. Die Kurven sind gegeneinander jeweils um eine Drittelperiode, bezogen auf den Winkelabstand $2\pi/N_r$ zweier Rotornuten, verschoben.

Die Erfindung eignet sich für den Einsatz bei Asynchronmaschinen in Regelantrieben, die von einem dreiphasigen, pulsweitenmodulierten Wechselrichter mit eingeprägter Gleichspannung (typisch 500 V) gespeist werden. Zur weiteren Erläuterung werde ohne Einschränkung der Allgemeinheit die Pulsweitenmodulation in bekannter Weise mit Hilfe von Raumzeigern beschrieben (siehe hierzu: J. Holtz, "*Pulsewidth Modulation for Electronic Power Conversion"*, Proceedings of the IEEE, Vol. 82, No. 8. S. 1194-1213, 1995). Der Raumzeiger der Statorspannung bestimmt sich danach durch die Definitionsgleichung zu

$$u_s = (2/3) (u_a + au_b + a^2 u_c) \qquad (2)$$

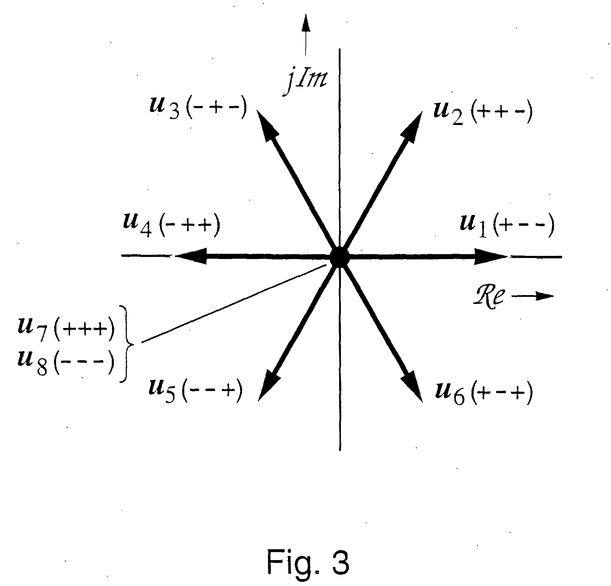

in der die Werte $u_a$, $u_b$ und $u_c$ die jeweiligen Spannungspotentiale an den Maschinenklemmen darstellen. Es gilt a = exp(j$2\pi/3$). Die Spannungspotentiale können in Abhängigkeit vom Schaltzustand des Wechselrichters nur die beiden Werte $U_d/2$ oder $-U_d/2$ annehmen. In der komplexen Ebene bildet sich der jeweilige Schaltzustand des Wechselrichters nach Fig. 3 durch acht diskrete Schaltzustandszeiger $u_1$ bis $u_8$ ab. Jeweils nebengestellt in Klammern sind die zugehörigen Spannungszustände an den drei Maschinenklemmen: beispielsweise bedeutet $u_1$(+ - -), daß das Potential $u_a$ den Wert $U_d/2$ besitzt und die Potentiale $u_b$ und $u_c$ jeweils den Wert $- U_d/2$. Der Kurzschlußzustand $U_s = 0$ ist redundant durch die als Nullzeiger bezeichneten Schaltzustandszeiger $U_7$(+ + +) und $U_8$(- - -) einstellbar. Die acht Schaltzustandszeiger $u_1$ bis $u_8$ repräsentieren also sechs aktive Schaltzustände und zwei Kurzschluß- oder Nullzustände (da die Schaltzustandszeiger praktisch eine Beschreibung der Schaltzustände (und damit der Ausgangsspannungen des Wechselrichters) darstellen werden die Bezugszeichen $u_k$ ($1 \leq k \leq 8$) nachfolgend für beide benutzt).

In einer ersten Ausführungsform des erfindungsgemäßen Verfahrens (nachfolgend als "erstes Verfahren" bezeichnet) wird der Umstand genutzt, daß bei reduzierter Drehfrequenz auch die Grundschwingungsspannungen an den Maschinenklemmen reduziert sind. Die Pulsweitenmodulation bewirkt dies dadurch, daß die Maschine zeitabschnittsweise durch den Wechselrichter dreisträngig kurzgeschlossen wird. Der Kurzschlußzustand dauert anteilig umso länger, je geringer die Drehfrequenz ist.

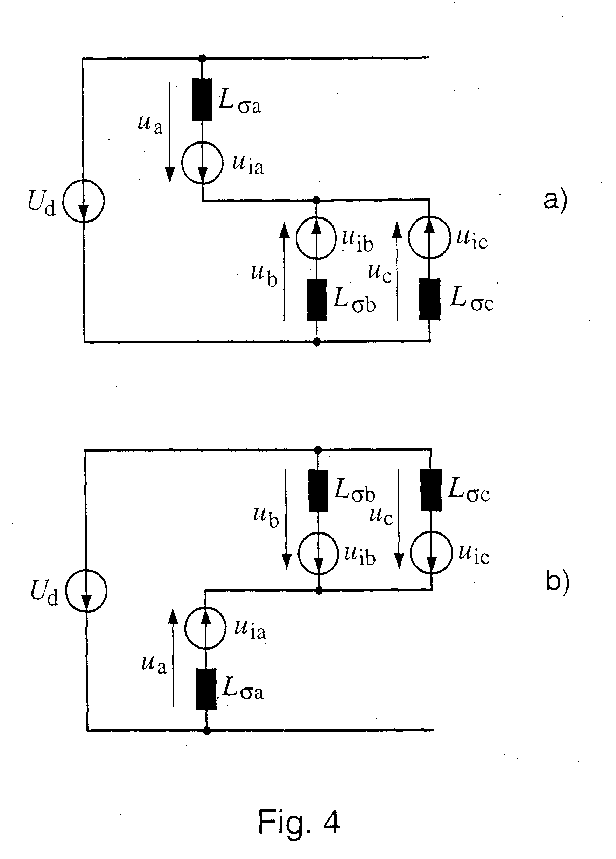

Es wird nun ein Kurzschlußzustand, der für die Zeitdauer $t_k$ bestehen soll, ganz oder zum Teil durch die zeitliche Aufeinanderfolge zweier aktiver Schaltzustände ersetzt. Es wird also zum Zwecke der Messung in die vom Pulsweitenmodulator vorgegebene betriebsmäßige Schaltzustandsfolge eingegriffen. Dabei ist die Maschine beispielsweise im ersten Schaltzustand $u_1$(+ - -) entsprechend Fig. 4a und im zweiten Schaltzustand $u_4$(- + +) entsprechend Fig. 4b mit der Gleichspannung $U_d$ verbunden.

Die beiden aktiven Schaltzustände sind so gewählt, daß die komplexe Summe der sie repräsentierenden Schaltzustandszeiger gerade den Wert Null ergibt. Wenn also jeder dieser Schaltzustände für die gleiche Dauer besteht, bewirken sie die gleiche Stromänderung in den drei Maschinensträngen, die auch aufgetreten wäre, wenn der Kurzschlußzustand nicht ganz oder zum Teil durch zwei aktive Schaltzustände ersetzt worden wäre. Das Modulationsgesetz für die Grundschwingung der Maschinenströme wird folglich nicht gestört. Die Dauer, für die jeder der beiden Schaltzustände besteht ist maximal $t_k/2$ und minimal gleich einer Mindestdauer $t_m$, die für eine Messung der Nullspannung im jeweiligen Schaltzustand mindestens erforderlich ist.

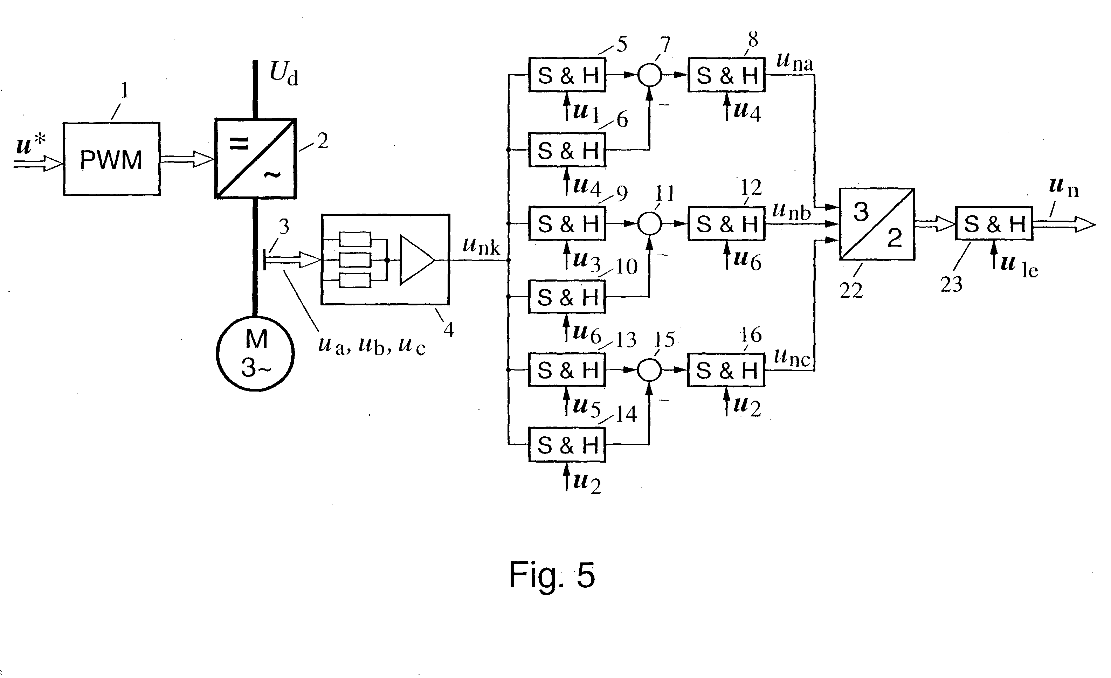

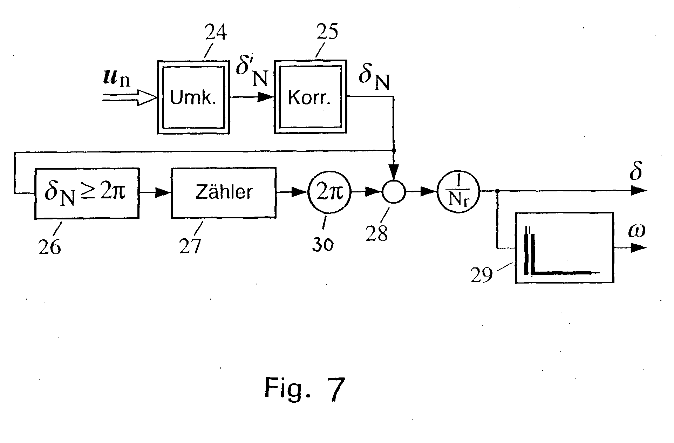

Die Rotorlage soll zunächst im Winkelbereich $\delta_N$ einer Nutteilung des Rotors bestimmt werden. Die Fig. 5 und 7 zeigen in Form von Funktionsblockdiagrammen ein Ausführungsbeispiel einer hierfür geeigneten Vorrichtung. Darin bezeichnet 1 einen von einem als Raumzeiger ausgebildeten Spannungssollwert gesteuerten Pulsweitenmodulator, der einen Wechselrichter 2 so ansteuert, daß dieser eine Folge von Schaltzuständen uk annimmt. Die Eingangsklemmen des Wechselrichters 2 sind mit einer nicht dargestellten Gleichstromquelle der Spannung $U_d$ verbunden, seine Ausgangsklemmen mit der Asynchronmaschine M. In einem Summierglied 4 wird während der vorgenannten ausgewählten aktiven Schaltzustände des Wechselrichters jeweils die Nullkomponente (Nullspannung)

$$u_{nk} = u_a + u_b + u_c \tag{3}$$

aus den meßbaren drei Strangspannungen $u_a$, $u_b$ und $u_c$ gebildet. Im ersten aktiven Schaltzustand $u_k$, (k = 1), stellt sich die zugehörige Nullspannung $u_{n1}$ auf den Wert

$$u_{n1} = U_d (L_{\sigma a}L_{\sigma b} + L_{\sigma a}L_{\sigma c} - 2L_{\sigma b}L_{\sigma c}) + u_{zus}(L_{\sigma a}, L_{\sigma b}, L_{\sigma c}, u_{ia}, u_{ib}, u_{ic}) \tag{4}$$

ein. Hierin ist $u_{zus}$ eine Zusatzspannung, die für das Meßergebnis ohne Bedeutung ist. Der Tastwert dieser Nullspannung wird im Halteglied 5 gespeichert, das durch ein mit dem Schaltzustand $u_1$ synchrones Abtastsignal aktiviert wird. (Der Einfachheit halber sind in den Figuren die Abtastsignale jeweils mit der derselben Bezeichnung versehen wie der zugehörige Schaltzustand. Die Erzeugung dieser Abtastsignale ist auf eine den Fachleuten ohne weiteres ersichtliche Weise möglich und soll hier nicht näher dargelegt werden.) Während des zweiten aktiven Zustands $u_k$ (k = 4) wird das Halteglied 6 durch ein mit dem Schaltzustand $u_4$ synchrones Abtastsignal aktiviert. Der Tastwert bildet sich wiederum entsprechend Gleichung (4), wobei sich aber das Vorzeichen von $U_d$ ändert.

Subtrahiert man nun den Tastwert der Nullspannung des jeweilig ersten Schaltzustands von demjenigen des zugehörigen zweiten Schaltzustands, so heben sich die Zusatzspannungen $u_{zus}$ in den jeweiligen Ausdrücken (4) heraus, und man erhält man als Meßwert

$$u_{na}(\delta_N) = 2U_d (L_{\sigma a}L_{\sigma b} + L_{\sigma a}L_{\sigma c} - 2L_{\sigma b}L_{\sigma c}). \tag{5}$$

Dieser Wert wird in einem Summierglied 7 gebildet und während des Zustands $u_4$ mittels eines entsprechenden Abtastsignals im Halteglied 8 gespeichert. Die Bezeichnung $u_{na}(\delta_N)$ zeigt an, daß die beteiligten aktiven Schaltzustandszeiger $u_1$ und $u_4$ in Richtung der Strangachse a orientiert sind. Der Verlauf der Kurve $u_{na}(\delta_N)$ nach Gleichung (5) ist in Fig. 2b dargestellt.

Alternativ läßt sich ein Kurzschlußzustand der Dauer $t_k$ (ganz oder zum Teil) auch durch die beiden aktiven Schaltzustände $u_3$ und $u_6$ ersetzen, deren Schaltzustandszeiger nach Fig. 3 jeweils um 120° voreilend gegenüber den Zustandszeigern $u_1$ und $u_4$ verdreht sind. Man erhält dann bei einer Auswertung über die Elemente 9 - 12 entsprechend Gleichung (5) die Kurve $u_{nb}(\delta_N)$ in Fig. 2b. Schließlich erhält man bei Verwendung der aktiven Schaltzustände $u_5$ und $u_2$ mittels der Elemente 13 - 16 die Kurve $u_{nc}(\delta_N)$. Voraussetzung ist dabei immer, daß die verwendeten aktiven Schaltzustände jeweils für dieselbe Zeitdauer herrschen.

Wie aus Fig. 2b ersichtlich, reflektiert jede der Meßwertkurven für $u_{na}$, $u_{nb}$ und $u_{nc}$ die Rotorlage im Bereich einer Nutteilung. Für die einfachste Ausführungsform der Erfindung reicht daher einer der in Fig. 5 dargestellten Meßkanäle, die von den Elementen 5 bis 8, 9 bis 12 bzw. 13 bis 16 gebildet werden. Wird nämlich vorausgesetzt, daß die Maschine sich nur in einer Drehrichtung bewegen kann, so reicht eine der Meßwertkurven $u_{na}$, $u_{nb}$, $u_{nc}$ für die Bestimmung der Rotorlage aus. Bei wechselnder Drehrichtung sind allerdings mindestens zwei der Meßkanäle erforderlich. Ein dritter Meßkanal ist zur Erhöhung der Genauigkeit vorteilhaft.

Bei Verwendung von zwei oder drei Meßkanälen liegt ein vollständiger Meßwertesatz immer erst beim Einschalten des jeweils letzten Schaltzustands $u_{le}$ eines Meßzyklus vor. Nimmt man beispielsweise an, daß die oberen beiden Meßkanäle in Fig. 5 verwendet werden, ist der letzte Schaltzustand $u_{le}$ der Schaltzustand $u_6$. Nimmt man an, daß alle drei Meßkanäle in Fig. 5 verwendet werden, ist dies der Schaltzustand $u_2$. In jedem Fall aktiviert ein mit dem letzten Schaltzustand $u_{le}$ synchrones Abtastsignal ein Halteglied 23, welches das Ausgangssignal eines Transformationsglieds 22 speichert.

Bei Verwendung von zwei Meßkanälen geschieht die Transformation im Transformationsglied 22 nach der Vorschrift

$$u_n = (u_{na} + j(u_{na} + 2 u_{nb})/\sqrt{3}) \tag{6}$$

Bei Verwendung von drei Meßkanälen wird die Transformation entsprechend Gleichung (2') ausgeführt:

$$u_n = (2/3)\,(u_{na} + a u_{nb} + a^2 u_{nc}). \qquad\qquad (2')$$

Das Ergebnis ist in beiden Fällen ein Drehzeiger $u_n$. Es bedarf keiner Erwähnung, daß das Transformationsglied 22 und das nachgeschaltete Halteglied 23 entfallen, wenn nur ein Meßkanal benutzt wird.

Bevor die Ableitung der inkrementellen Rotorlage aus dem Drehzeiger $u_n$ beschrieben wird, soll erst eine zweite Ausführungsform des erfindungsgemäßen Verfahrens (nachfolgend als "zweites Verfahren" bezeichnet) erläutert werden.

Das erste Verfahren ist anwendbar, wenn der Wechselrichter betriebsmäßig (d.h. als Folge des Modulationsgesetzes und ohne die Berücksichtigung der erfindungsgemäßen Messung) vom Pulsweitenmodulator in einen Kurzschlußzustand versetzt werden soll, der dann aber für den Zweck der Messung durch zwei aktive Schaltzustände ersetzt wird. Das zweite Verfahren ist dagegen dann anwendbar, wenn der Wechselrichter betriebsmäßig vom Pulsweitenmodulator in einen aktiven Schaltzustand, also nicht in einen Kurzschlußzustand versetzt wird. Das Verfahren beruht nicht wie das erste Verfahren auf einer Differenzbildung. Daher geht die Zusatzspannung $u_{zus}$ aus Gleichung (4) mit in das Meßergebnis ein und erzeugt einen, wenngleich geringen, Fehler.

Ähnlich wie beim ersten Verfahren kann die zur Bestimmung der Rotorlage erforderliche Messung der Nullspannung auch beim zweiten Verfahren während nur eines Schaltzustands, während zweier Schaltzustände oder während dreier Schaltzustände erfolgen. Während beim ersten Verfahren jeweils zwei Messungen während eines, zweier oder dreier Schaltzustandspaare erfolgen, sieht das zweite Verfahren jeweils nur eine Messung während eines, zweier oder dreier Schaltzustände vor. Dabei müssen im Fall der Messung bei mehreren Schaltzuständen die den Schaltzuständen entsprechenden Schaltzustandszeiger jeweils um 60° gegeneinander verdreht sein, sie brauchen aber nicht unbedingt in unmittelbarer zeitlicher Aufeinanderfolge aufzutreten. Der Pulsweitenmodulator steuert betriebsmäßig in unmittelbarer zeitlicher Folge stets zwei nebeneinanderliegende (also um 60° gegeneinander verdrehte) aktive Zeiger an, die als Hauptzeiger nachfolgend mit $u_{h1}$ und $u_{h2}$ bezeichnet werden. Mögliche Kombinationen von Hauptzeigern sind in der untenstehenden Tabelle zusammengefaßt. Die entsprechenden betriebsmäßig auftretenden Schaltzustände können daher zur Messung herangezogen werden.

Wenn die Messung bei drei Schaltzuständen erfolgen soll, bedarf es eines dritten Zeigers, der entweder zu $u_{h1}$ oder $u_{h2}$ benachbart liegt. Der Pulsweitenmodulator kann im Rahmen der betriebsmäßigen Steuerung in unmittelbarer zeitlicher Folge oder in geringem zeitlichen Abstand nach anderen Zeigern einen diese Bedingung erfüllenden dritten aktiven Zeiger ansteuern. Dies muß aber nicht so sein. Wenn nicht zu erwarten ist, daß der für die Messung benötigte dritte Zeiger innerhalb eines angemessenen Zeitintervalls nach den beiden Hauptzeigern betriebsmäßig angesteuert wird, sieht die Erfindung vor, ihn bedarfsweise nach den beiden Hauptzeigern für eine kurze Zeitdauer $(t_m)$ als Zusatzzeiger $u_z$ einzuschalten. Wenn ein solcher Zusatzzeiger zum Zwecke der Messung eingeschaltet wird, muß er nach erfolgter Messung durch das Einfügen von einem oder mehreren Schaltzuständen in seiner Wirkung aufgehoben werden. Die einzufügenden Schaltzustände und ihre jeweilige Dauer werden aus dem Modulationsgesetz des Pulsweitenmodulators abgeleitet. Ob es sich bei dem dritten Zeiger um den "künstlichen" Zusatzzeiger oder einen vom Pulsweitenmodulator ohnehin vorgegebenen Zeiger handelt, ist für die eigentliche Messung bedeutungslos, da die Zeiger in beiden Fällen identisch sind. Soweit also die nachfolgenden Ausführungen auf den Zusatzzeiger Bezug nehmen, gelten sie in gleicher Weise für den vom Pulsweitenmodulator ohnehin vorgegebenen dritten Zeiger, der einen Zusatzzeiger überflüssig macht. Die den Hauptzeigern zuzuordnenden Zusatzzeiger sind in der Tabelle angegeben.

Tabelle

| $u_{h1}$ | $u_{h2}$ | $u_{le}$ |
|---|---|---|
| $u_1$ | $u_2$ | $u_3 \lor u_6$ |
| $u_2$ | $u_3$ | $u_1 \lor u_4$ |
| $u_3$ | $u_4$ | $u_2 \lor u_5$ |
| $u_4$ | $u_5$ | $u_3 \lor u_6$ |
| $u_5$ | $u_6$ | $u_1 \lor u_4$ |
| $u_6$ | $u_1$ | $u_2 \lor u_5$ |

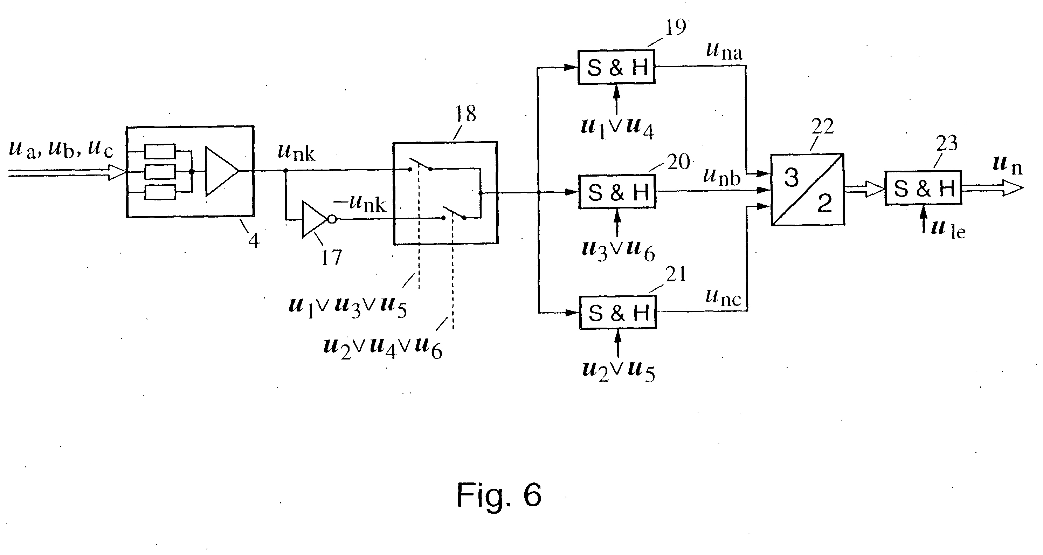

Fig. 6 zeigt ein Beispiel einer für die Durchführung des zweiten Verfahrens geeigneten Vorrichtung. In den Fig. 5 und 6 sind gleiche Elemente mit denselben Bezugzeichen versehen. Der Pulsweitenmodulator 1, der Wechselrichter 2 und die Asynchronmaschine M sind der Einfachheit halber in Fig. 6 weggelassen. Die im Summierglied 4

gebildete Nullspannung $u_{nk}$ wird über ein Schaltglied 18 während der Schaltzustände $u_1$, $u_3$ oder $u_5$ direkt, und während der Schaltzustände $u_2$, $u_4$ oder $u_6$ über einen Invertierer 17 auf die Eingänge von drei Haltegliedern 19, 20 und 21 gegeben. Das Halteglied 19 wird beim Auftreten einer der Schaltzustände $u_1$ oder $u_4$ aktiviert und liefert dann das Ausgangssignal $u_{na}$. Das Halteglied 20 wird beim Auftreten einer der Schaltzustände $u_3$ oder $u_6$ aktiviert und liefert dann das Ausgangssignal $u_{nb}$. Das Halteglied 21 wird beim Auftreten einer der Schaltzustände $u_2$ oder $u_5$ aktiviert und liefert dann das Ausgangssignal $u_{nc}$.

Wie schon erwähnt, können im Rahmen der Erfindung auch bei dem zweiten Verfahren alle drei in Fig. 6 gezeigten Meßkanäle, nur zwei von ihnen oder nur einer verwendet werden. Ein vollständiger Wertesatz liegt beim Einschalten des jeweils letzen Zeigers $u_{le}$ vor. Bei Verwendung nur eines Meßkanals ist der letze Zeiger der Hauptzeiger $u_{h1}$, bei Verwendung von zwei Meßkanälen ist dies der zweite Hauptzeiger $u_{h2}$, und bei Verwendung von drei Meßkanälen ist dies der Zusatzzeiger $u_z$. Ein mit dem letzten Zeiger $u_{le}$ synchrones Abtastsignal aktiviert dann das Halteglied 23, welches wie bei dem Ausführungsbeispiel gemäß Fig. 5 die vom Transformationsglied 22 entsprechend Gleichung (2') beziehungsweise Gleichung (6) zu einem Drehzeiger $u_n$ zusammengesetzten Signale $u_{na}$ und $u_{nb}$ beziehungsweise $u_{na}$, $u_{nb}$ und $u_{nc}$ speichert.

In Fig. 7 wird erläutert, wie die inkrementelle Rotorlage $\delta$ aus dem Drehzeiger $u_n$ abgeleitet wird, wie er entweder mit der Vorrichtung nach Fig. 5 oder derjenigen nach Fig. 6 gewonnen wird. Zunächst wird vorzugsweise bei der Verwendung von zwei (oder drei) Meßkanälen zur Erhöhung der Genauigkeit der Lageerfassung bei der Bestimmung des zweiten (und dritten) Meßwerts (jeweils) die Zeitdifferenz erfaßt, um die die Bestimmung des ersten Meßwerts zurückliegt. Mit dieser Zeitdifferenz wird die aus dem ersten (und zweiten) Meßwert bestimmte Rotorlage mit Hilfe der aus den Messungen bekannten Drehfrequenz auf den Zeitpunkt der letzten Messung umgerechnet. Das Transformationsglied 22 und das nachgeschaltete Halteglied 23 entfallen, wenn nur ein Meßkanal benutzt wird.

Nachfolgend wird die Winkellage $\delta_{N'}$ im Bereich einer Rotornutteilung des Rotors mit Hilfe der Umkehrfunktion 24 berechnet.

Wegen der aus Gleichung (1) ersehbaren quadratischen Abhängigkeit der totalen Streuinduktivitäten von den Gegeninduktivitäten $M_{sx}$ stellen die gemessenen Kurven (Fig. 2b) keine einfrequenten harmonischen Schwingungen dar. Im Detail hängt ihre Form vor allem von der Anzahl und von den Abmessungen der Rotornuten ab und ist daher immer maschinenspezifisch. Zur Erzielung einer höheren Genauigkeit kann die Form zunächst während eines Testlaufs der Maschine mit konstanter Drehfrequenz gemessen und in einer Korrekturtabelle 25 abgelegt werden. Mit Hilfe dieser Korrekturtabelle kann die fehlerbehaftete Winkellage $\delta_N'$ in die genaue Winkellage $\delta_N$ überführt werden. Bei weniger hohen Genauigkeitsanforderungen kann auf die Korrekturtabelle verzichtet werden. Das korrigierte Signal $\delta_N$ repräsentiert die genaue Rotorlage im Bereich einer Rotornutteilung.

Bei Verwendung nur eines Meßkanals ist Umkehrfunktion 24 die Arkussinusfunktion. Bei Verwendung von zwei oder drei Meßkanälen bilden die zusammengesetzten Signale $u_{na}$ und $u_{nb}$ beziehungsweise $u_{na}$, $u_{nb}$ und $u_{nc}$ einem Drehzeiger $u_n$, aus dessen Komponenten die Winkellage $\delta_{N'}$ mit Hilfe der als Arkustangensfunktion ausgebildeten Umkehrfunktion 24 berechnet wird,

Nach Ablauf einer Periode des Signals $\delta_N$ wird durch die Bedingung (Element 26), die als Vergleicher realisierbar ist, ein Modulo-$N_r$-Zähler 27 mit dem Inhalt $Z_\delta$ um ein Inkrement weitergeschaltet. Der Inhalt $Z_\delta$ des Zählers 27 nimmt also periodisch die Werte 0 bis $N_r - 1$ an, die im Multiplizierer 30 mit $2\pi$ multipliziert werden. Das Rotorlagesignale $\delta$ im Bereich einer vollen Umdrehung des Rotors wird durch ein Summierglied 28 gemäß

$$\delta = (2\pi Z_\delta + \delta_N)/N_r \qquad (7)$$

gebildet. Nachfolgend wird durch einen Differenzierer 29 die Drehfrequenz gemäß $\omega = d\delta/dt$ aus dem Rotoriagesignal $\delta$ abgeleitet. Für viele Anwendungen interessiert nur die Drehfrequenz. Diese kann schon aus der (korrigierten oder nicht korrigierten) Winkellage im Bereich einer Rotornutteilung bestimmt werden. In solchen Fällen können die Elemente 26, 27, 28 und 30 in Fig. 7 entfallen.

Die Drehrichtung des Rotors ist mit der Drehrichtung des Drehzeigers $u_n$

$$\text{sign}(d\delta_N/dt) \qquad (8)$$

identisch.

Bei der praktischen Ausführung ist zur Abtastung der Nullspannung eine Mindestzeit $t_m$ der Größenordnung 10 $\mu s$ erforderlich. Es kann sein, daß die vom Pulsweitenmodulator vorgegebene Zeitdauer des jeweilig benutzten Schaltzustandszeigers (einschließlich eines Nullzeigers beim ersten Verfahren) kleiner ist als für eine sichere Messung der Nullspannung durch Signalabtastung mindestens erforderlich wäre. In einem soichen Falle wird der Schaltzustandszeiger unterdrückt und seine Dauer gespeichert. Bei einem nächsten Auftreten des gleichen Zustandszeigers wird festgestellt, ob die nun vorgegebene Zustandsdauer, vermehrt um den früheren Speicherwert, für die Abtastung des Meßwerts ausreicht. Ist dies nicht der Fall, so wird die Zustandsdauer zum vorigen Speicherwert addiert und das Ergebnis gespeichert. Dieser Vorgang wird so lange wiederholt, bis die erreichte Gesamtzustandsdauer für die Abtastung der Meßspannung ausreicht. Insgesamt wird dadurch das Modulationsgesetz nicht verletzt, wenngleich eine Erhöhung der Stromverzerrung in Kauf genommen werden muß.

Die beschriebenen Meßverfahren ergänzen einander nun so, daß das erste Verfahren, das die Abtastung der Nullkomponente während des Nullzustands des Wechselrichters vornimmt, vorzugsweise dann eingesetzt wird, wenn die Zeitdauer der Nullzustände des Wechselrichters größer ist als diejenige der aktiven Zeiger; dies ist bei niedriger Drehfrequenz der Fall. Beim zweiten Verfahren wird die Nullkomponente während eines aktiven Schaltzustands abgetastet. Daher ist dieses Verfahren vorteilhaft, wenn die Zeitdauer der aktiven Zeiger größer ist als diejenige der Nullzeiger; dies ist bei höherer Drehfrequenz der Fall. Je nach Einsatzfall, kann das eine oder das andere Verfahren eingesetzt werden. Es ist aber auch möglich, zwischen beiden Verfahren abhängig vom Betriebszustand der Asynchronmaschine umzuschalten.

Die Genauigkeit der Lagemessung kann bei den voranstehend beschriebenen Meßverfahren durch den Einfluß der Eisensättigung, durch lokale Feldverzerrungen im Bereich der Nuten (Nutenoberwellen) oder durch unsymmetrische Ausbildung der Wicklungen beeinträchtigt werden. In diesen Fällen ist es vorteilhaft, die Fehler des Drehzeigers $u_n$ bzw. $z_n$ durch eine nachgeschaltete Korrektur zu vermindern. Die nachfolgend beschriebenen Korrekturverfahren werden am Beispiel des Drehzeigers $u_n$ beschrieben. Sie lassen sich in gleicher Weise auf den Drehzeiger $z_n$ anwenden.

Ein erstes Korrekturverfahren dient dazu, den sättigungsbedingten Einfluß des Rotorfeids auf die totalen Streuinduktivitäten zu kompensieren. Da dieser Einfluß von der Polarität des Rotorfeids nicht abhängt, tritt eine Modulation des Drehzeigers $u_n$ mit der doppeiten Statorfrequenz auf. Der verzerrte Drehzeiger hat die Form

$$u_n = |u_{nf}|\ \exp[(j(\delta_N+\delta_0)] + u_{n2}\ \exp(-j2\omega)_s t), \tag{19}$$

wobei mit $|u_{nf}|$ die Amplitude der Grundkomponente von $u_n$, mit $u_{n2}$ die komplexe Amplitude der rotorfeldbedingten Verzerrung und mit $\omega_s$ die Statorfrequenz bezeichnet ist.

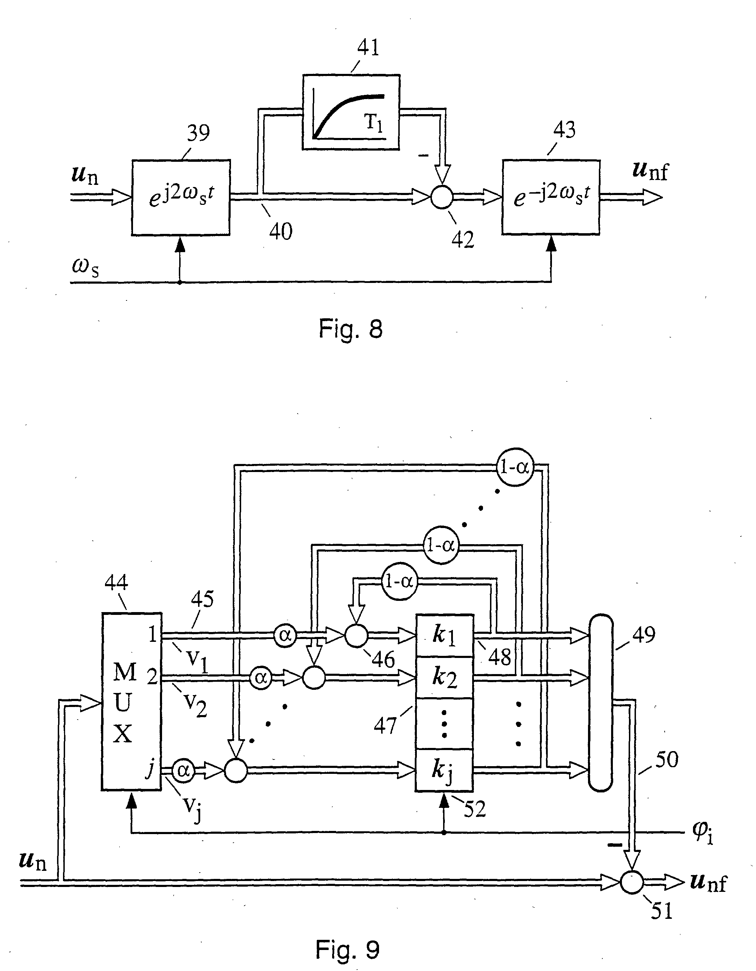

Das erste Korrekturverfahren wird unter Bezug auf Fig. 8 weiter erläutert. Zunächst wird der verzerrte Drehzeiger $u_n$ in einem Transformationsglied 39 in ein mit der zweifachen Statorfrequenz $2\omega_s$ umlaufendes Koordinatensystem überführt. Formal wird die Transformation durch Multiplikation von Gleichung (19) mit dem Faktor $\exp(j2w_s t)$ ausgeführt. Man erhält

$$u_n\ \exp(j2\omega_s t) = |u_{nf}|\ \exp[j(\delta_N + \delta_O + 2\omega_s t)] + u_{n2}. \tag{20}$$

In dieser Gleichung ist $u_{n2}$ bei Abwesenheit weiterer Fehlereinflüsse ein konstanter Zeiger, der mittels eines die Komponente $|u_{nf}|\ \exp(j(\delta_N + \delta_O + 2\omega_s t))$ ausfilternden Tiefpasses 41 extrahiert werden kann. Der Tiefpaß hat zu diesem Zweck eine Zeitkonstante $T_1$, die größer als $1/2\omega_s$ ist vorzugsweise etwa $10/2\omega_s$ beträgt. Unter dem Einfluß der Nichtlinearität der Eisensättigung, der Unsymmetrie der Statorwicklung oder der exzentrischen Lage des Rotors kann der Zeiger $u_{n2}$ allerdings noch zeitlichen Schwankungen unterliegen. Diese werden durch den Tiefpaß 41 ebenfalls weitgehend ausgefiltert. Der mittels des Tiefpasses gewonnene Zeiger wird nachfolgend in einem Summierglied 42 vom transformierten Signal 40 abgezogen. Nach der Rücktransformation in einem Transformationsglied 43 erhält man den unverzerrten Drehzeiger

$$u_{nf} = |u_{nf}|\ \exp(j\delta_n + \delta_o).$$

Ein alternatives zweites Korrekturverfahren ist dann vorteilhaft, wenn man zusätzlich die vorerwähnten Einflüsse der Nichtlinearität der Eisensättigung, der Unsymmetrie der Statorwicklung oder der exzentrischen Lage des Rotors beseitigen möchte. Das Verfahren arbeitet, ähnlich wie die anhand von Fig. 7 erläuterte Korrektur der fehlerbehafteten Winkellage, mittels einer Korrekturtabelle.

Während sich im Betrieb der Maschine das Rotorfeld mit der Winkelgeschwindigkeit $\omega_s$ der eingespeisten Leiterströme dreht, ist die Drehgeschwindigkeit $\omega$ des Rotors wegen des Schlupfs im Motorbetrieb etwas geringer, und im Generatorbetrieb etwas höher. Daher stehen die Winkelgeschwindigkeiten $N_r\omega$ des unverzerrten Drehzeigers $u_{nf}$ und $\omega_s$ des Rotorfelds nicht in einem ganzzahligen Frequenzverhältnis. Vielmehr sind die beiden Frequenzkomponenten zueinander asynchron. Diese Eigenschaft wird dazu benutzt, um den Fehlereinfluß des Rotorfelds von der Rotorlageinformation des Drehzeigers zu isolieren und in einer Tabelle festzuhalten.

Die zugehörige Einrichtung ist in Fig. 9 dargestellt. Es wird hier Bezug genommen auf den Feldwinkel $\varphi$, der die Richtung des Rotorfelds der Maschine gegenüber dem Stator angibt. Der Feldwinkel $\varphi$ ist in einer Regeleinrichtung, die nach dem Verfahren der Feldorientierung (Leonhard: "*Control of Electrical Drives"*, Springer Berlin 1985) arbeitet, bereits als Signal vorhanden. Es wird in Fig. 9 in Form eines diskretisierten Signals $\varphi_i$ verwendet, das eine volle Umdrehung des Rotorfelds in j gleichmäßig verteilte, diskrete Einzelschritte auflöst. Ein sinnvolles Maß für einen Einzelschritt ist beispielsweise ein Grad; in diesem Falle hat j den Wert 360.

Mit Hilfe des diskretisierten Feldwinkels $\varphi_i$, i = 1 ... j, wird der Drehzeiger $u_n$ in einem Multiplexer 44 fortlaufend abgetastet und entsprechend der jeweiligen Richtung des Rotorfelds auf einen der j Ausgangskanäle geschaltet. Beispielsweise wird für i = 1, also in der Rotorfeldposition $\varphi_1$, ein Tastwert $v_1$ des Drehzeigers $u_n$ auf den Ausgangskanal 45 geschaltet. Der Drehzeiger beinhaltet die Beiträge der zwei vorerwähnten Frequenzkomponenten: die erste Komponente ist sättigungsbedingt und daher der Winkellage $\varphi_1$ des Rotorfelds eindeutig zugeordnet; sie ändert sich synchron zum umlaufenden Rotorfeld. Bei unverändertem Erregungszustand der Maschine wird diese Komponente daher immer den gleichen Beitrag zum Tastwert $v_1$ liefern. Die zweite Komponente ändert sich dagegen asynchron zur Abtastung; sie bildet sich in einer Folge von Tastwerten $v_1$ als höherfrequente Drehkomponente ab, die durch ein Tiefpaßfilter weitgehend eliminiert werden kann.

Das Tiefpaßfilter ist unter Verwendung der Tabelle 47 aufgebaut, in die die gefilterten Korrekturwerte $k_i$, i = 1 ... j, des Fehlerzeigers eingetragen werden. Beispielsweise wird der n-te Korrekturwert $k_1$ dadurch gebildet, daß der Tastwert $v_1$ zum Beginn eines Zustands $\varphi_1$ mit einem $\alpha$-fachen Anteil zum (1-$\alpha$)-fachen des momentanen (n-1)-ten Korrekturwerts $k_1$ addiert wird und daß zum Ende des Zustands $\varphi_1$ der (n-1)-te Korrekturwert $k_1$ mit dem n-ten Korrekturwert überschrieben wird ($k_{1(n)} = \alpha v_{1(n)} + (1-\alpha)k_{1(n-1)}$), wobei n die laufende Nummer der Erneuerung des Korrekturwerts $k_i$ ist. Diese Operationen werden durch den Anstieg bzw. Abfall des Signals $\varphi_1$ am Steuereingang 52 der Tabelle 47 ausgelöst. Der Wert $\alpha$ bestimmt sich zu $\alpha = 2\pi/\omega_s/T_2$, wenn $T_2$ die Zeitkonstante des Tiefpaßfilters ist.

In der Anwendung sollte $T_2$ so gewählt werden, daß das Tiefpaßfilter auch noch die Ungleichförmigkeit der Rotornutstreuung im Verlauf einer vollen Rotorumdrehung eliminiert. Dies ist mit $T_2 > 10 \cdot 2\pi/\omega_r$ gegeben, wobei $\omega_r$ die Rotorfrequenz im Betriebspunkt ist. Im stationären Zustand nimmt dann $k_1$ einen Wert an, der nur noch vom Rotorfeldwinkel $\varphi_1$ abhängt; alle mit der Rotoriage veränderlichen Komponenten werden dagegen unterdrückt.

Bei Ausdehnung der Betrachtung auf alle j diskreten Winkelstellungen des Rotorfelds erhält man als Ergebnis, daß die Korrekturwerte $k_i$ die mit dem Rotorfeld umlaufenden räumlichen Fehler des Drehzeigers $u_n$ repräsentieren, die durch die Nichtlinearität der magnetischen Sättigung, die Unsymmetrie der Statorwicklung oder die exzentrischen Lage des Rotors hervorgerufen werden. Der Sättigungseinfluß wird hier genauer erfaßt als mit dem ersten Korrekturverfahren, weil dieses nur Fehler berücksichtigt, die mit der doppelten Statorfrequenz umlaufen. Tatsächlich enthält der Fehler aber noch weitere Frequenzkomponenten, weil die Sättigung ein nichtlinearer Einfluß ist.

Durch die Ansteuerung der Tabelle 47 mit dem diskretisierten Feldwinkelsignal $\varphi_i$ erscheinen an deren Ausgang im Verlauf einer vollen Umdrehung des Rotorfelds die Tabellenwerte $k_i$, die in der oben beschriebenen Weise ständig erneuert werden, in aufsteigender Folge. Sie setzen sich über ein Summierglied 49 zu einem Korrektursignal 50 zusammen, das der jeweiligen Feldrichtung winkelrichtig zugeordnet ist. Das Korrektursignal wird an einem Summierglied 51 vom Drehzeiger $u_n$ subtrahiert. Das Ergebnis ist ein fehlerkorrigierter Wert $u_{nf}$ des Drehzeigers, der als Eingangssignal der Umkehrfunktion 24 in Fig. 7 zugeführt wird.

Wenn beim Einschalten eines das zweite Korrekturverfahren benutzenden Regelantriebs die Korrekturwerte in der Tabelle unbestimmt oder null sind, können anfänglich relativ große Fehler auftreten, bis sich die Korrekturwerte stabilisiert haben, Diesen Stabilisierungsvorgang kann man dadurch verkürzen, daß die Tabelle beim Einschalten initialisiert, d.h. mit Anfangskorrekturwerten geladen wird. Für die Initialisierung geeignete Anfangskorrekturwerte können beispielsweise dadurch gewonnen werden, daß man bei einem Testlauf der Maschine, ohne Initialisierung der Tabelle, die sich in einem stationären Zustand ergebenden Korrekturwerte der Tabelle entnimmt und in einen nichtflüchtigen Speicher schreibt. Mit Hilfe der gespeicherten Korrekturwerte kann die Tabelle dann immer wieder initialisiert werden.

Es ist hervorzuheben, daß die erfindungsgemäße Messung der inkrementellen Rotorlage an keinerlei Voraussetzungen bezüglich des Zustands der Maschine gebunden ist. Die Maschine kann magnetisch erregt oder unerregt sein; der Rotor kann sich drehen oder im Stillstand befinden; und es können betriebliche Ströme in Stator oder Rotor fließen oder nicht. Die gute Auflösung des Meßverfahrens wird von diesen Zuständen nicht beeinflußt.

**Patentansprüche**

1. Verfahren zur Bestimmung der inkrementellen Rotorlage einer über einen Wechselrichter (2) betriebenen dreiphasigen Asynchronmaschine (M), wobei der Wechselrichter unter der Steuerung durch einen Pulsweitenmodulator (1) nacheinander verschiedene von mehreren möglichen aktiven, je durch einen Schaltzustandszeiger ($u_1$ - $u_6$) eindeutig beschreibbaren Schaltzuständen annimmt, **dadurch gekennzeichnet, daß** die Asynchronmaschine (M) vorübergehend zur Messung in einen ausgewählten der möglichen Schaltzustände versetzt und dabei ein Tastwert ($u_{nk}$) der Summe der Strangspannungen ($u_a$, $u_b$, $u_c$) als eine von den totalen Streuinduktivitäten ($L_{\sigma a}$, $L_{\sigma b}$, $L_{\sigma c}$) der Statorwicklung abhängige Größe gemessen wird und daß die inkrementelle Rotorlage aus dem Meßwert ($u_{na}$, $u_{nb}$, $u_{nc}$) und seiner bekannten Abhängigkeit von der Rotorlage errechnet wird.

**2.** Verfahren nach Anspruch 1, **dadurch gekennzeichnet, daß** die Drehfrequenz durch Differentiation eines sich aus wiederholten Messungen und Berechnungen ergebenden Rotorlagesignals ($\delta$, $\delta_N$) bestimmt wird.

**3.** Verfahren nach Anspruch 1 oder 2, **dadurch gekennzeichnet, daß** die Asynchronmaschine (M) nacheinander in zwei oder drei verschiedene ausgewählte Schaltzustände versetzt wird, für jeden der ausgewählten Schaltzustände ein zugehöriger Meßwert ($u_{na}$, $u_{nb}$, $u_{nc}$) mit einer jeweiligen Messungen ermittelt wird und die Rotorlage aus der Kombination der zwei oder drei Meßwerte errechnet wird, wobei die den ausgewählten Schaltzuständen entsprechenden Schaltzustandszeiger jeweils um 60° gegeneinander verdreht sind, so daß die zwei bzw. drei Meßwerte ein zwei- bzw. dreiphasiges Drehsystem bilden und die Meßwerte zu einem Drehzeiger ($u_n$) des Drehsystems kombiniert werden.

**4.** Verfahren nach Anspruch 3, **dadurch gekennzeichnet, daß** drei verschiedene Schaltzustände ausgewählt werden, von denen zwei betriebsmäßig unmittelbar aufeinanderfolgen, während der dritte Schaltzustand für den Zweck der Messung zusätzlich zur normalen Schaltzustandsfolge nach dem zweiten Schaltzustand eingeschaltet wird und in seiner Wirkung nachfolgend durch einen oder mehrere weitere zusätzliche Schaltzustände kompensiert wird.

**5.** Verfahren nach Anspruch 1 oder 2, **dadurch gekennzeichnet, daß** ein betriebsmäßig auftretender Nullzustand, bei dem die Asynchronmaschine dreisträngig kurzgeschlossen wird, in seiner ganzen oder einem Teil seiner Dauer durch ein aktives Schaltzustandspaar ersetzt wird, welches von zwei nacheinander für jeweils gleiche Dauer hervorgerufene, sich in ihrer Wirkung aufhebende aktive Schaltzustände gebildet wird, und daß die Messung gesondert für jeden dieser beiden Schaltzustände des Schaltzustandspaares erfolgt und die Meßwertdifferenz des so erhaltenen Meßwertpaares als die von den totalen Streuinduktivitäten der Statorwicklung abhängige Größe gebildet wird.

**6.** Verfahren nach Anspruch 5, **dadurch gekennzeichnet, daß** zwei oder drei betriebsmäßig nacheinander auftretende Nullzustände jeweils durch ein aktives Schaltzustandspaar ersetzt werden, daß für jedes der zwei oder drei Schaltzustandspaare die Meßwertdifferenz aus den mittels einer jeweiligen Messung gewonnenen Meßwertpaaren gebildet wird und die inkrementelle Rotorlage aus der Kombination der zwei oder drei Meßwertdifferenzen berechnet wird, wobei die den Schaltzustandspaaren entsprechenden Schaltzustandszeigerpaare jeweils um 60° gegeneinander verdreht sind, so daß die zwei bzw. drei Meßwertdifferenzen ein zwei- bzw. dreiphasiges Drehsystem bilden und die Meßwertdifferenzen zu einem Drehzeiger ($u_n$) des Drehsystems kombiniert werden.

**7.** Verfahren nach Anspruch 3, 4 oder 6, **dadurch gekennzeichnet, daß** im Fall zweier oder dreier Messungen zum Erhalt von zwei oder drei Meßwerten oder Meßwertdifferenzen die Zeitspanne zwischen dem Zeitpunkt der letzten Messung und dem Zeitpunkt der einen oder der beiden vorangehenden Messungen erfaßt wird und die Rotorlage, die sich aus der oder den vorangehenden Messungen ergibt mit Hilfe der aus den Messungen bekannten Drehfrequenz auf den Zeitpunkt der letzten der zwei oder drei Messungen umgerechnet wird.

**8.** Verfahren nach einem der Ansprüche 3, 4, 6 oder 7, **dadurch gekennzeichnet, daß** die Rotorlage ($\delta_N$) im Bereich einer Rotornutteilung aus dem Winkel arg($u_n$) des Drehzeigers ($u_n$) errechnet wird und daß nach jeder vollen Periode der Rotorlage ($\delta_N$) im Bereich einer Rotornutteilung ein Modulo-$N_r$-Zähler (27) weitergeschaltet wird, wobei $N_r$ die Zahl der Rotornuten ist, und daß die inkrementelle Rotorlage im Bereich einer Umdrehung aus der Summe des Zählerstands und der Rotorlage ($\delta_N$) im Bereich einer Rotornutteilung ermittelt wird.

**9.** Verfahren nach Anspruch 8, **dadurch gekennzeichnet, daß** die Rotorlage ($\delta_N$) im Bereich einer Rotornutteilung aus dem Winkel arg($u_n$) des Drehzeigers ($u_n$) errechnet wird und mit Hilfe einer Korrekturtabelle (25) korrigiert wird, wobei der Inhalt der Korrekturtabelle (25) aus Meßwerten errechnet wird, die bei einem vorherigen Testlauf der Maschine bei konstanter Drehfrequenz erfaßt wurden.

**10.** Verfahren nach einem der vorhergehenden Ansprüche, **gekennzeichnet durch** folgende Schritte:

(a) Vergleichen der vom Pulsweitenmodulator (1) vorgegebenen Dauer eines für die Messung ausgewählten Schaltzustands mit einer für die Messung erforderlichen Mindestdauer,

(b) Durchführen der Messung, wenn Schritt (a) ergibt, daß die Dauer gleich der Mindestdauer oder größer als diese ist, sowie andernfalls

(c1) Unterdrücken des entsprechenden Schaltzustands und Speichern der für den unterdrückten Schaltzustands eigentlich vorgegebenen Dauer,

(c2) Warten, bis der Pulsweitenmodulator (1) denselben Schaltzustand erneut vorgibt,

(c3) Vergleichen der Summendauer aus der vom Pulsweitenmodulator vorgegebenen Dauer des erneut vorgegebenen Schaltzustands und der gespeicherten Dauer mit der Mindestdauer,

(c4) wenn Schritt (c3) ergibt, daß die Summendauer gleich der Mindestdauer größer als diese ist, Einschalten des Schaltzustands für die Summendauer und Durchführen der Messung, sowie andernfalls

(c5) erneutes Unterdrücken des Schaltzustands, Speichern der Summendauer und Wiederholen der Schritte (c2) bis (c5) bis in Schritt (c4) die akkumulierte Summendauer gleich der Mindestdauer oder größer als diese ist.

**11.** Verfahren nach Anspruch 10 in Verbindung mit Anspruch 5 oder 6, **dadurch gekennzeichnet, daß** die für die Messung erforderliche Mindestdauer das Doppelte der zur Messung eines Tastwerts ($u_{nk}$) benötigten Dauer beträgt.

**12.** Verfahren nach Anspruch 8 oder 9, **dadurch gekennzeichnet, daß** die Rotorlage ($\delta_N$) aus dem Winkel arg($u_{nf}$) eines korrigierten Drehzeigers ($u_{nf}$) errechnet wird, wobei zum Erhalt des korrigierten Drehzeigers ($u_{nf}$) der unkorrigierte Drehzeiger ($u_n$) in ein mit der zweifachen Statorfrequenz ($2\omega_s$) umlaufendes Koordinatensystem transformiert wird, aus dem transformierten Signal (40) durch Tiefpaßfilterung mit einer Grenzfrequenz, die niedriger als die zweifache Statorfrequenz ($2\omega_s$) ist, ein sättigungsbedingte Verzerrungen des unkorrigierten Drehzeigers ($u_n$) repräsentierendes Korrektursignal erzeugt wird, das Korrektursignal vom transformierten Signal (40) subtrahiert wird, und die Differenz einer Rücktransformation unterzogen wird.

**13.** Verfahren nach Anspruch 8 oder 9, **dadurch gekennzeichnet, daß** die Rotoriage ($\delta_N$) aus dem Winkel arg($u_{nf}$) eines korrigierten Drehzeigers ($u_{nf}$) errechnet wird, der durch Subtraktion eines durch Tiefpaßfilterung des unkorrigierten Drehzeigers ($u_n$) gewonnenen Korrektursignals (50), das im wesentlichen alle synchron mit dem Rotorfeld umlaufenden Frequenzkomponenten des unkorrigierten Drehzeigers ($u_n$) repräsentiert, vom unkorrigierten Drehzeiger ($u_n$) gewonnen wird, wobei

in einer Tabelle (47) für jeden Wert eines diskretisierten, die Richtung des Rotorfeldes gegenüber dem Stator angebenden Feldwinkels ($\varphi_i$) ein zugehöriger Korrekturwert ($k_i$) gespeichert ist, die Korrekturwerte $k_i$ dadurch ständig erneuert werden, daß der unkorrigierte Drehzeiger ($u_n$; $z_n$) in einem Multiplexer (44) bei jeder Änderung des diskretisierten Feldwinkels ($\varphi_i$) abgetastet wird und aus dem Tastwert $v_i$ des Drehzeigers und aus dem dem momentanen Wert des diskretisierten Feldwinkels ($\varphi_i$) zugeordneten, in der Tabelle (47) gespeicherten Korrekturwert $k_i$ ein neuer Korrekturwert gemäß nachstehender Formel

$$k_{i(n)} = \alpha v_{i(n)} + (1-\alpha)k_{i(n-1)},$$

worin:

n - die laufende Nummer der Erneuerung des Korrekturwerts $k_i$ ist
$\alpha = 2\pi/\omega_s T_2$,
$\omega_s$ - die Statorfrequenz ist und
$T_2$ - die Zeitkonstante der Tiefpaßfilterung ist,

errechnet wird, und wobei die Korrekturwerte nach Maßgabe des jeweiligen Feldwinkels aus der Tabelle (47) ausgelesen und zu dem Korrektursignal (50) zusammengesetzt werden.

**14.** Verfahren nach Anspruch 13, **dadurch gekennzeichnet, daß** die Tabelle (47) mit vorbestimmten Anfangskorrekturwerten initialisiert wird.

**15.** Vorrichtung zur Durchführung des Verfahrens nach einem der Ansprüche 1 bis 11, umfassend:

einen Pulsweitenmodulator (1),

einen eingangsseitig an eine Gleichstromquelle und ausgangsseitig an die Asynchronmaschine (M) angeschlossenen Wechselrichter (2), dessen Steuereingänge mit Ausgängen des Pulsweitenmodulator (1) verbunden sind und der mittels jeweiliger Steuersignale vom Pulsweitenmodulator (1) nacheinander in jeweils einen einer vorgegebenen Anzahl von Schaltzuständen versetzbar ist, und

eine Meßeinrichtung (3, 4) zur Messung der Strangspannungen ($u_a$, $u_b$, $u_c$) der Asynchronmaschine und zur Bildung der Summe der Strangspannungen,

**gekennzeichnet durch**

eine Abtastsignal-Generatoreinrichtung zur Erzeugung wenigstens eines mit einem ausgewählten der Schaltzustände synchronen Abtastsignals,

eine erste Halte-Einrichtung (19-21), deren Eingang mit dem Ausgang der Meßeinrichtung (3, 4) verbunden ist und die von dem Abtastsignal triggerbar ist, um einen Tastwert ($u_{nk}$) der Summe der Strangspannungen zu halten, und

eine Recheneinrichtung zur Errechnung der Rotorlage anhand des in der Halte-Einrichtung (5, 6, 9, 10, 13, 14; 19-21) gehaltenen Tastwerts.

16. Vorrichtung nach Anspruch 15, bei der die möglichen Schaltzustände aktive Schaltzustände und Nullzustände, bei denen die Asynchronmaschine dreisträngig kurzgeschlossen wird, umfassen und die ferner aufweist:

eine Erfassungseinrichtung zur Erfassung, daß der Pulsweitenmodulator (1) im Begriff ist, einem Nullzustand des Wechselrichters (2) entsprechende Steuersignale auszugeben,

eine auf die Erfassungseinrichtung ansprechende Steuer-Einrichtung zur Steuerung des Wechselrichters nacheinander für jeweils gleiche Dauer in zwei aktive, sich in ihrer Wirkung aufhebende Schaltzustände eines ersten Paares der möglichen Schaltzustände,

eine Abtastsignal-Generatoreinrichtung zur Erzeugung eines ersten Abtastsignal-Paares von zwei mit den Schaltzuständen des ausgewählten Schaltzustand-Paares jeweils synchronen Abtastsignalen,

ein erstes Paar Halte-Einrichtungen mit einer ersten und einer zweiten Halte-Einrichtung (5, 6; 9, 10; 13, 14), deren Eingänge mit dem Ausgang der Meßeinrichtung (3, 4) verbunden sind und die jeweils von einem der Abtastsignale des ersten Abtastsignal-Paares triggerbar sind, um einen jeweiligen Tastwert ($u_{nk}$) der Summe der Strangspannungen zu halten,

ein erstes Summierglied (7; 11; 15) zur Bildung der Differenz zwischen den beiden in den Halte-Einrichtungen des ersten Halte-Einrichtung-Paares gehaltenen Tastwerten, und

eine erste weitere Halte-Einrichtung (8; 12; 16), deren Eingang mit dem Ausgang des ersten Summierglieds verbunden ist und die vom späteren der beiden Abtastsignale des ersten Abtastsignal-Paares triggerbar ist, um die Tastwertdifferenz zu halten,

wobei die Recheneinrichtung das Ausgangssignal der weiteren Halte-Einrichtung erhält.

17. Vorrichtung nach Anspruch 15, bei der

die Steuer-Einrichtung den Wechselrichter bei jedem von zwei oder drei in zeitlicher Folge auftretenden Nullzuständen nacheinander für jeweils gleiche Dauer in zwei aktive, sich in ihrer Wirkung aufhebende Schaltzustände eines jeweiligen Paares der möglichen Schaltzustände steuert, und

die Abtastsignal-Generatoreinrichtung zwei oder drei Abtastsignal-Paare von mit den beiden Schaltzuständen des jeweiligen Schaltzustand-Paares jeweils synchronen Abtastsignalen erzeugt, und die ferner umfaßt:

zwei oder drei Paare Halte-Einrichtungen mit jeweils einer ersten und einer zweiten Halte-Einrichtung (5, 6; 9, 10; 13, 14), deren Eingänge mit dem Ausgang der Meßeinrichtung (3, 4) verbunden sind und die jeweils von einem der Abtastsignale eines jeweiligen der zwei oder drei Abtastsignal-Paare triggerbar sind, um einen jeweiligen Tastwert ($u_{nk}$) der Summe der Strangspannungen zu halten,

zwei oder drei Summierglieder (7, 11, 15) zur Bildung der Differenz zwischen den beiden in den Abtast-und-Halte-Einrichtungen eines jeweiligen Halte-Einrichtung-Paares gehaltenen Tastwerten,

zwei oder drei weitere Halte-Einrichtungen (8, 12, 16), deren Eingang jeweils mit dem Ausgang eines entsprechenden der Summierglieder (7, 11, 15) verbunden ist und die vom späteren der beiden Abtastsignale eines jeweiligen der Abtastsignal-Paare triggerbar sind, um die jeweilige Tastwertdifferenz ($u_{na}$, $u_{nb}$, $u_{nc}$) zu halten,

eine Transformations-Einrichtung (22) zum Kombinieren der in den zwei oder drei weiteren Halte-Einrichtungen (8, 12, 16) gehaltenen Tastwertdifferenzen zu einem Drehzeiger $u_n$ nach der Formel

$$u_n = (u_{na} + j(u_{na} + 2 u_{nb})/\sqrt{3}),$$

im Fall von zwei weiteren Halte-Einrichtungen, bzw.

$$u_n = 2/3 (u_{na} + au_{nb} + a^2 u_{nc}),$$

im Fall von drei weiteren Halte-Einrichtungen, wobei $u_{na}$, $u_{nb}$, $u_{nc}$ die von den weiteren Halte-Einrichtungen (8, 12, 16) gehaltenen Signale sind und a = exp(j2π/3), und
eine Ausgangshalte-Einrichtung (23), deren Eingang mit dem Ausgang der Transformations-Einrichtung (22) verbunden ist und die von dem spätesten der Abtastsignale aller Abtastsignal-Paare triggerbar ist, um das Ausgangssignal der Transformations-Einrichtung (22) zu halten,

wobei die Recheneinrichtung das Ausgangssignal der Ausgangshalte-Einrichtung (23) erhält.

18. Vorrichtung nach einem der Ansprüche 15 bis 17, umfassend:

eine Abtastsignal-Generatoreinrichtung zur Erzeugung von zwei oder drei mit zwei bzw. drei ausgewählten der Schaltzustände synchronen Abtastsignalen,
zwei oder drei erste Halte-Einrichtungen (19-21), die von einem jeweiligen der Abtastsignale triggerbar sind,
eine Schalteinrichtung (18) über die die Eingänge der zwei oder drei ersten Halte-Einrichtungen (19-21) wahlweise direkt oder über und einen Invertierer (17) mit dem Ausgang der Meßeinrichtung (3, 4) verbindbar sind, wobei die Schalteinrichtung abhängig vom jeweiligen Schaltzustand des Wechselrichters (2) umschaltbar ist, eine Transformations-Einrichtung (22) zum Kombinieren der in den zwei oder drei ersten Halte-Einrichtungen (19 - 21) gehaltenen Tastwerte zu einem Drehzeiger $u_n$ nach der Formel

$$u_n = (u_{na} + j(u_{na} + 2 u_{nb})/ \sqrt{3}), \text{ im Fall von zwei ersten Halte-Einrichtungen, bzw.}$$

$$u_n = 2/3 (u_{na} + au_{nb} + a^2 u_{nc}), \text{ im Fall von drei ersten Halte-Einrichtungen,}$$

wobei $u_{na}$, $u_{nb}$, $u_{nc}$ die von den ersten Halte-Einrichtungen (8, 12, 16) gehaltenen Signale sind und a = exp (j2π/3), und
eine Ausgangshalte-Einrichtung (23), deren Eingang mit dem Ausgang der Transformations-Einrichtung (22) verbunden ist und die von dem spätesten der zwei oder drei Abtastsignale triggerbar ist, um das Ausgangssignal der Transformations-Einrichtung (22) zu halten,

wobei die Recheneinrichtung das Ausgangssignal der Ausgangshalte-Einrichtung (23) erhält.

19. Vorrichtung nach einem der Ansprüche 15 bis 18, bei der mit Ausnahme der Meßeinrichtung und des Wechselrichters alle Elemente als ein programmgesteuerter MikroComputer ausgebildet sind.

**Claims**

1. A method to determine the incremental rotor position of a three-phase induction motor (M) operated through a dc-to-ac converter (2), with the dc-to-ac converter, under the control of a pulsewidth modulator (1), successively assuming different ones of several possible active switching states, each uniquely described by a respective switching state vector ($u_1$ - $u_6$), **characterized in that** the induction motor (M), for measurement purposes, is temporarily put into a selected one of the possible switching states, while a sample value ($u_{nk}$) of the sum of the phase voltages ($u_a$, $u_b$, $u_c$) is measured as a quantity depending on the total leakage inductances ($L_{\sigma a}$, $L_{\sigma b}$, $L_{\sigma c}$) of the stator winding, and the incremental rotor position is computed from the measured value ($u_{na}$, $u_{nb}$, $u_{nc}$) and its known dependence of the rotor position.

2. A method according to claim 1, **characterized in that** the angular velocity is determined by differentiating a rotor position signal ($\delta$, $\delta_N$) that results from repetitive measurements and computations.

**3.** A method according to claim 1 or 2, **characterized in that** the induction motor (M) is successively put into two or three different selected switching states, a pertaining measured value ($u_{na}$, $u_{nb}$, $u_{nc}$) is taken by a respective measurement for each of the selected switching states, and the rotor position is computed from the combination of the two or three measured values, wherein the switching state vectors that correspond to the selected switching states are displaced by 60° with respect to each other, such that the two or three measured values constitute a two-phase or a three-phase revolving system, respectively, und the measured values are combined to form a revolving vector ($u_n$) of the revolving system.

**4.** A method according to claim 3, **characterized in that** three different switching states are selected, of which two follow immediately one another during regular operation while the third switching state, for the purpose of measurement, is turned on, in addition to the regular sequence of switching states, following the second switching state and is subsequently compensated by one or more further additional switching states.

**5.** A method according to claim 1 or 2, **characterized in that** a zero state occurring at regular operation, during which the induction motor is in three-phase short circuit condition, is replaced for its total or partial duration by a pair of active switching states, formed by two active switching states that are generated successively in equal duration and cancel their respective effects, and separate measurements are taken for each of the two switching states of the switching state pair and the difference of the measured values of the measurement pair thus obtained is formed as said quantity that depends on the total leakage inductances of the stator winding.

**6.** A method according to claim 5, **characterized in that** two or three zero states occurring one upon another at regular operation are respectively replaced by a pair of active switching states, for each of the two or three switching state pairs, the difference of the measured values is formed from the measurement pairs that are obtained by a respective measurement, and the incremental rotor position is computed from the combination of the two or three differences of measured values, wherein the pairs of switching state vectors that correspond to the switching state pairs are displaced by 60° with respect to each other, such that the two or three differences of measured values form a two-phase or a three phase revolving system, respectively, and the differences of measured values are combined to form a revolving vector ($u_n$) of the revolving system.

**7.** A method according to claim 3, 4 or 6, **characterized in that,** in case of two or three measurements that provide two or three measured values or differences of measured values, the elapsed time is acquired between the time instant of the last measurement and the time instant of the one or two preceding measurements, and, using the angular velocity known from the measurements, the rotor position that results from the preceding measurement or measurements is converted to correspond to the time instant of the last of the two or three measurements.

**8.** A method according to any one of claims 3, 4, 6 or 7, **characterized in that** the rotor position ($\delta_N$) within a rotor slot pitch is computed from the angle $\arg(u_n)$ of the revolving vector ($u_n$), and a modulo-$N_r$ counter (27) is incremented after each full cycle within a rotor slot pitch of the rotor position ($\delta_N$), wherein N, is the number of rotor slots, and the incremental rotor position within a revolution is determined from the sum of the counter value and the rotor position ($\delta_N$) within a rotor slot pitch.

**9.** A method according to claim 8, **characterized in that** the rotor position ($\delta_N$) within a rotor slot pitch is computed from the angle $\arg(u_n)$ of the revolving vector ($u_n$), and corrected using a correction table (25), wherein the contents of the correction table (25) is computed from measured values of a preceding test at which the machine is run at constant angular velocity.

**10.** A method according to any one of the preceding claims, **characterized by** the following steps:

(a) comparing the duration of a switching state, generated by the pulsewidth modulator (1) and selected for the measurement, with a minimum duration required for the measurement,
(b) taking the measurement if step (a) indicates that the duration is greater than or equals the minimum duration, and otherwise
(c1) suppressing the respective switching state and storing the originally generated duration of the suppressed switching state,
(c2) waiting until the pulsewidth modulator (1) generates the same switching state again,
(c3) comparing the sum of the durations of the switching state newly generated by the pulsewidth modulator (1) and the stored duration with the minimum duration,
(c4) if step (c3) indicates that the sum of the durations is greater than or equals the minimum duration, activating the switching state for the sum of the durations and taking the measurement, and otherwise
(c5) again suppressing the switching state, storing the sum of the durations and repeating steps (c2) to (c5) until the accumulated sum of the durations in step (c4) is greater than or equals the minimum duration.

**11.** A method according to claim 10 in conjunction with claim 5 or 6, **characterized in that** the minimum duration required for measurement equals twice the time required to measure a sample value ($u_{nk}$).

**12.** A method according to claim 8 or 9, **characterized in that** the rotor position ($\delta_N$) is computed from the angle arg ($u_{nf}$) of a corrected revolving vector ($u_{nf}$), wherein to obtain the corrected revolving vector ($u_{nf}$) the uncorrected revolving vector ($u_n$) is transformed into a coordinate system that rotates at double stator frequency ($2\omega_s$), a correction signal is generated from the transformed signal (40) by passing the latter through a low pass filter having a corner frequency lower than the double stator frequency ($2\omega_s$), the correction signal representing the saturation induced distortions of the uncorrected revolving vector ($u_n$), and the correction signal is subtracted from the transformed signal (40) the difference being subjected to a retransformation.

**13.** A method according to claim 8 or 9, **characterized in that** the rotor position ($\delta_N$) is computed from the angle arg ($u_{nf}$) of a corrected revolving vector ($u_{nf}$), which is obtained by subtracting a correction signal (50) from the uncorrected revolving vector ($u_n$) which correction signal is obtained by low pass filtering the uncorrected revolving vector ($u_n$) and represents substantially all frequency components of the uncorrected revolving vector ($u_n$) that rotate in synchronism with the rotor field, wherein
a table (47) stores for each value of a discretized field angle ($\varphi_i$) that indicates the direction of the rotor field with respect to the stator, a pertaining correction value ($k_i$), the correction values $k_i$ are continuously updated by sampling the uncorrected revolving vector ($u_n$; $z_n$) in a multiplexer (44) at each change of the discretized field angle ($\varphi_i$), and a new correction value is computed from the sampled value $v_i$ of the revolving vector and from the correction value $k_i$ stored in the table (47) and being associated to the actual value of the discretized field angle ($\varphi_1$), according to the equation

$$k_{i(n)} = \alpha V_{i(n)} + (1-\alpha)k_{i(n-1)},$$

where
n is the current number for updating the correction value $k_i$
$\alpha = 2\pi/\omega_s T_2$,
$\omega_s$ is the stator frequency and
$T_2$ is the time constant of the low pass filtering,
and wherein the correction values are read from the table (47) in accordance with the respective field angle, and are assembled to form the correction signal (50).

**14.** A method according to claim 13, **characterized in that** the table (47) is initialized by predetermined initial correction values.

**15.** An apparatus for carrying out the method according to any one of claims 1 to 11, comprising:

a pulsewidth modulator (1),
a dc-to-ac converter (2) having its input connected to a dc current source and its output to the induction motor (M), and having its control inputs connected to the outputs of the pulsewidth modulator (1), and which, by means of respective control signals from the pulsewidth modulator (1), can be successively put into a respective one of a given number of switching states, and
measuring means (3, 4) to measure the phase voltages ($u_a$, $u_b$, $u_c$) of the induction motor and to form the sum of the phase voltages,

**characterized by**
sampling signal generating means to generate at least one sampling signal synchronized with a selected one of the switching states,
first hold means (19-21) having its input connected to the output of the measuring means (3, 4) and being triggerable by the sampling signal to hold a sample value ($u_{nk}$) of the sum of the phase voltages, and
computing means to compute the rotor position based on the sample value held in the hold means (5, 6, 9, 10, 13, 14; 19-21).

**16.** An apparatus according to claim 15, **characterized in that** the possible switching states comprise active states and zero states in which the induction motor is in three-phase short circuit condition, and which further comprises:

acquisition means to determine that the pulsewidth modulator (1) is about to output control signals that represent a zero state of the dc-to-ac converter (2),

control means responsive to the acquisition means to control the dc-to-ac converter to assume successively in equal respective durations two active switching states of a first pair of said possible switching states, said two active switching states canceling their respective effects,

a sampling signal generating means to generate a first pair of sampling signals, consisting of two sampling signals respectively synchronised with the switching states of the selected pair of switching states,

a first pair of hold means composed of a first and a second hold means (5, 6; 9, 10; 13, 14), the inputs of which are connected to the outputs of the measuring means (3, 4), each being triggerable by a respective one of the sampling signals of the first pair of sampling signals to hold a respective sample value ($u_{nk}$) of the sum of the phase voltages,

a first adder (7; 11; 15) to form the difference of the two sample values held by the hold means of the first pair of hold means, and

first additional hold means (8; 12; 16), the input of which is connected to the output of the first adder and which is triggerable by the later one of the two sampling signals of the first pair of sampling signals to obtain the difference of the sample values,

where the computing means receives the output signal of the additional hold means.

**17.** Apparatus according to claim 15, **characterized in that**

the control means controls the dc-to-ac converter at each of two or three zero states occurring in a time sequence, to assume successively two active switching states of a respective pair of said possible switching states, said two active switching states being of respective equal duration and canceling their respective effects, and

the sampling signal generating means generates two or three pairs of sampling signals that are synchronous with a respective one of the two switching states of the respective pair of switching states, and which further comprises

two or three pairs of hold means each composed of a first and a second hold means (5, 6; 9, 10; 13, 14), the inputs of which are connected to the outputs of the measuring means (3, 4), each being triggerable by one of the sampling signals of a respective one of the two or three pairs of sampling signals to hold a respective sample value ($u_{nk}$) of the sum of the phase voltages,

two or three adders (7, 11, 15) to form the difference of the two sample values held by the sample-and-hold means of a respective pair of hold means, and

two or three additional hold means (8, 12, 16) the input of each being connected to the output of a corresponding one of the adders (7, 11, 15) and which are triggerable by the later one of the two sampling signals of a respective one of said pairs of sampling signals to hold the respective difference of sample values ($u_{na}$, $u_{nb}$, $u_{nc}$),

transformation means (22) to combine the differences of sample values held by the two or three additional hold means (8, 12, 16) to form a rotating vector $u_n$ using the equation

$$u_n = (u_{na} + j(u_{na} + 2 u_{nb})/\sqrt{3}),$$

in case of two additional hold means, or

$$u_n = 2/3 (u_{na} + au_{nb} + a^2 u_{nc}),$$

in case of three additional hold means, respectively, where $u_{na}$, $u_{nb}$, $u_{nc}$ are the signals held by the additional hold means (8, 12, 16) and a = $\exp(j2\pi/3)$, and

output hold means (23), the input of which is connected to the output of the transformation means (22) and which is triggerable by the latest one of the sampling signals of all pairs of sampling signals to hold the output signal of the transformation means (22),

wherein the computing means receives the output signal of the output hold means (23).

**18.** Apparatus according to any one of claims 15 to 17, comprising

sampling signal generating means to generate two or three sampling signals in synchronism with two or three selected ones, respectively, of the switching states,

two or three first hold means (19-21) triggerable by a respective one of the sampling signals,

switching means (18), by which the inputs of the two or three first hold means (19-21) are selectively connectable, directly or through an inverter (17), with the output of the measuring means (3, 4), wherein the switching means is commutable depending on the respective switching state of the dc-to-ac converter (2),

transformation means (22) to combine the sample values held by the two or three first hold means (19-21) to form a rotating vector $u_n$ using the equation

$$u_n = (u_{na} + j(u_{na} + 2\,u_{nb})/\sqrt{3}),$$

in case of two first hold means, or

$$u_n = 2/3\,(u_{na} + au_{nb} + a^2 u_{nc}),$$

in case of three first hold means, respectively,

where $u_{na}$, $u_{nb}$, $u_{nc}$ are the signals held by the first hold devices (8, 12, 16) and a = exp(j2π/3), and

output hold means (23), the input of which is connected to the output the transformation means (22) and which is triggerable by the latest one of the two or three sampling signals to hold the output signal of the transformation means (22),

wherein the computing means receives the output signal of the output hold means (23).

**19.** An apparatus according to any one of claims 15 to 18, **characterized in that** all elements except the measuring means and the dc-to-ac converter are formed by a programmable microcomputer.

## Revendications

**1.** Procédé de détermination de la position incrémentale du rotor d'un moteur asynchrone (M) triphasé fonctionnant avec un onduleur (2), l'onduleur adoptant successivement, sous le contrôle d'un modulateur d'impulsions (1), différents états de commutation parmi plusieurs états possibles décrits chacun clairement par un phaseur d'états de commutation ($u_1$ - $u_6$), **caractérisé en ce que** le moteur asynchrone (M) est décalé provisoirement, pour une mesure, dans l'un choisi parmi les états de commutation possibles et une valeur de détection ($u_{nk}$) de la somme des tensions par phase d'enroulement ($u_a$, $u_b$, $u_c$) est mesurée en tant que grandeur dépendant des inductances de fuite ($L_{\sigma a}$, $L_{\sigma b}$, $L_{\sigma c}$) de l'enroulement du stator, et **en ce que** la position incrémentale du rotor est calculée à partir de la valeur mesurée ($u_{na}$, $u_{nb}$, $u_{nc}$) et de sa corrélation connue avec la position du rotor.

**2.** Procédé selon la revendication 1, **caractérisé en ce que** la fréquence de rotation est déterminée grâce à la différentiation d'un signal de position du rotor (δ, δN) provenant de mesures et de calculs répétés.

**3.** Procédé selon la revendication 1 ou 2, **caractérisé en ce que** le moteur asynchrone (M) est décalé successivement dans deux ou trois états de commutation sélectionnés, pour chacun des états de commutation, une valeur mesurée ($u_{na}$, $u_{nb}$, $u_{nc}$) est déterminée à l'aide d'une mesure appropriée et la position du rotor est calculée à partir de la combinaison des deux ou trois valeurs mesurées, les phaseurs d'états de commutation correspondant aux états de commutation sélectionnés étant chacun décalés de 60° les uns par rapport aux autres, de telle sorte que les deux ou trois valeurs mesurées constituent un système de rotation bi- ou triphasé et que les valeurs mesurées sont combinées en un phaseur de rotation ($u_n$) du système de rotation.

**4.** Procédé selon la revendication 3, **caractérisé en ce que** trois différents états de commutation sont sélectionnés, dont deux se succèdent fonctionnellement, tandis que le troisième état de commutation est enclenché, en plus de la suite normale des états de commutation, après le deuxième état de commutation et est compensé ensuite dans son action par un ou plusieurs autres états de commutation supplémentaires.

**5.** Procédé selon la revendication 1 ou 2, **caractérisé en ce qu'**un état nul survenant lors du fonctionnement, dans lequel le moteur asynchrone est court-circuité sur les trois conducteurs, est remplacé, dans sa durée entière ou partielle, par une paire active d'états de commutation, laquelle est constituée de deux états de commutation actifs successifs, provoqués pour la même durée et se compensant, et **en ce que** la mesure est réalisée séparément pour chacun des deux états de commutation de la paire d'états de commutation et la différence des valeurs mesurées de la paire de valeurs ainsi obtenue constitue la grandeur dépendant des inductances de fuite totales de l'enroulement du stator.

6. Procédé selon la revendication 5, **caractérisé en ce que** deux ou trois états nuls successifs, survenant lors du fonctionnement, sont remplacés chacun par une paire d'états de commutation active, **en ce que**, pour chacun des deux ou trois paires d'états de commutation, la différence des valeurs mesurées est constituée des paires de valeurs mesurées obtenues à l'aide d'une mesure appropriée et la position incrémentale du rotor est calculée à partir de la combinaison des deux ou trois différences de valeurs mesuré, les paires de phaseurs d'états de commutation correspondants aux paires d'états de commutation étant décalées de 60° l'une par rapport à l'autre, de telle sorte que les deux ou trois différences de valeurs mesurées constituent un système de rotation bi- ou triphasé et que les différences de valeurs mesurées sont combinées en un phaseur de rotation ($u_n$) du système de rotation.

7. Procédé selon la revendication 3, 4 ou 6, **caractérisé en ce que**, dans le cas des deux ou trois mesures permettant d'obtenir deux ou trois valeurs mesurées ou différences de valeurs mesuré, l'intervalle de temps entre l'instant de la dernière mesure et l'instant de la ou des deux mesures précédentes est saisi et la position du rotor, obtenue à partir de la ou des mesures précédentes, est recalculée, à l'aide de la fréquence de rotation obtenue à partir des mesures, à l'époque des deux ou trois dernières mesures.

8. Procédé selon l'une des revendications 3, 4, 6 ou 7, **caractérisé en ce que** la position du rotor ($\delta_N$) est calculée, au niveau d'un pas d'encoche du rotor, à partir de l'angle arg($u_n$) du phaseur de rotation ($u_n$) et **en ce que**, après chaque période entière de la position du rotor ($\delta_N$), un compteur modulo-$N_r$ (27) est branché en plus au niveau d'un pas d'encoche du rotor, $N_r$ étant le nombre d'encoches du rotor, et **en ce que** la position incrémentale du rotor est déterminée, au niveau d'une rotation, à partir de la somme de l'état du compteur et de la position du rotor ($\delta_N$) au niveau d'un pas d'encoche du rotor.

9. Procédé selon la revendication 8, **caractérisé en ce que** la position du rotor ($\delta_N$) est calculé, au niveau d'un pas d'encoche du rotor, à partir de l'angle arg($u_n$) du phaseur de rotation ($u_n$) et est corrigé à l'aide d'un tableau de correction (25), le contenu du tableau de correction (25) étant calculé à partir de valeurs mesurées qui ont été déterminées lors d'une précédente marche de test du moteur à fréquence de rotation constante.

10. Procédé selon l'une des revendications précédentes, **caractérisé par** les étapes suivantes :

   (a) comparaison de la durée, prédéterminée par le modulateur d'impulsions (1), d'un état de commutation sélectionné pour la mesure avec une durée minimale nécessaire à la mesure,
   (b) réalisation de la mesure lorsque l'étape (a) indique que la durée est égale ou supérieure à la durée minimale, sinon,
   (c1) inhibition de l'état de commutation correspondant et enregistrement de la durée effectivement prédéterminée pour l'état de commutation inhibé,
   (c2) attente, jusqu'à ce que le modulateur d'impulsions (1) définisse à nouveau le même état de commutation,
   (c3) comparaison de la somme des durées obtenue à partir de la durée, prédéterminée par le modulateur d'impulsions, de l'état de commutation prédéterminé à nouveau et de la durée enregistrée avec la durée minimale,
   (c4) lorsque l'étape (c3) indique que la somme des durées est égale ou supérieure à la durée minimale, enclenchement de l'état de commutation pour la somme des durées et réalisation de la mesure, sinon,
   (c5) nouvelle inhibition de l'état de commutation, enregistrement de la somme des durées et répétition des étapes (c2) à (c5) jusqu'à ce qu'à l'étape (c4), la somme des durées accumulées soit égale ou supérieure à la durée minimale.

11. Procédé selon la revendication 10 en relation avec la revendication 5 ou 6, **caractérisé en ce que** la durée minimale nécessaire à la mesure est le double de la durée nécessaire à la mesure d'une valeur de détection ($u_{nk}$) .

12. Procédé selon la revendication 8 ou 9, **caractérisé en ce que** la position du rotor ($\delta_N$) est calculée à partir de l'angle arg($u_n$) d'un phaseur de rotation ($u_{nf}$) corrigé, le phaseur de rotation ($u_n$) non corrigé étant transformé en un système de coordonnées tournant avec la fréquence double du stator ($2\omega_s$) pour obtenir le phaseur de rotation ($u_{nf}$) corrigé, à partir du signal transformé (40) par filtrage passe-bas avec une fréquence limite plus faible que la double fréquence du stator ($2\omega_s$), un signal de correction représentant les distorsions du phaseur de rotation ($u_n$)

dues à la saturation est généré, le signal de correction est soustrait du signal transformé (40) et la différence est soumise à une transformation inverse.

**13.** Procédé selon la revendication 8 ou 9, **caractérisé en ce que** la position du rotor ($\delta_N$) est calculée à partir de l'angle arg($u_{nf}$) d'un phaseur de rotation ($u_{nf}$) corrigé qui est obtenu par soustraction du phaseur de rotation non corrigé ($u_n$) et d'un signal de correction (50) obtenu par un filtrage passe-bas du phaseur non corrigé ($u_n$), et représentant, en substance, l'ensemble des composantes de fréquence du phaseur de rotation non corrigé ($u_n$) tournant de manière synchrone avec le champ du rotor,

une valeur de correction ($k_i$) associée étant enregistrée dans un tableau (47) pour chaque valeur d'un angle de champ ($\varphi_i$) discret donnant la direction du champ du rotor par rapport au stator, les valeurs de correction $k_i$ étant constamment renouvelées par le fait que le phaseur de rotation non corrigé ($u_n;z_n$) est introduit dans un multiplexeur (44) à chaque modification de l'angle de champ discret ($\varphi_i$), et une nouvelle valeur de correction est calculée à partir de la valeur de détection $v_i$ du phaseur de rotation et de la valeur de correction $k_i$ enregistrée dans le tableau (47) et correspondant à la valeur momentanée de l'angle de champ discret ($\varphi_i$), selon la formule suivante :

$$k_{i(n)} = \alpha v_{i(n)} + (1-\alpha)k_{i(n-1)}$$

dans laquelle :

n est le nombre courant de renouvellement de la valeur de correction $k_i$
$\alpha = 2\pi/\omega_s T_2$,
$\omega_s$ est la fréquence du stator et
$T_2$ est la constante de temps du filtrage passe-bas, les valeurs de correction étant lues dans le tableau (47) selon l'angle de champ correspondant et étant intégrés dans le signal de correction (50).

**14.** Procédé selon la revendication 13, **caractérisé en ce que** le tableau (47) est initialisé avec des valeurs initiales de correction prédéterminées.

**15.** Dispositif de réalisation du procédé selon l'une des revendications 1 à 11, comprenant :

un modulateur d'impulsions (1),
un onduleur (2), branché du côté de l'entrée à une source de courant continu et du côté de la sortie au moteur asynchrone (M), dont les entrées de contrôle sont reliées aux sorties du modulateur d'impulsions (1) et qui peut être décalé, à l'aide de signaux de contrôle appropriés du modulateur d'impulsions (1), successivement dans l'un des états de commutation et,
un dispositif de mesure (3, 4) pour mesurer les tensions des phases d'enroulement ($u_a$, $u_b$, $u_c$) du moteur asynchrone et pour constituer la somme des tensions des phases d'enroulement,

**caractérisé par**
un générateur de signaux de balayage générant au moins un signal de balayage synchronisé avec un des états de commutation sélectionnés,
un premier dispositif de maintien (19-21) dont l'entrée est reliée à la sortie du dispositif de mesure (3, 4) et qui peut être déclenché par le signal de balayage, afin de maintenir une valeur de détection ($u_{nk}$) de la somme des tensions des phases d'enroulement et
un dispositif de calcul pour calculer la position du rotor à l'aide de la valeur de détection maintenue dans le dispositif de maintien (5, 6, 9, 10, 13, 14 ; 19-21).

**16.** Dispositif selon la revendication 15, dans lequel les états de commutation possibles comprennent des états de commutation actifs et des états nuls, dans lesquels le moteur asynchrone est court-circuité sur les trois conducteurs et qui comporte en outre :

un dispositif de saisie pour détecter si le modulateur d'impulsions (1) est sur le point de générer des signaux de contrôle correspondant à un état nul de l'onduleur (2),
un générateur de signaux de balayage pour générer une première paire de signaux de balayage de deux signaux de balayage synchronisés avec la paire d'états de commutation sélectionnée,
une première paire de dispositifs de maintien avec des premier et deuxième dispositifs de maintien (5, 6 ; 9, 10 ; 13, 14) dont les entrées sont reliées à la sortie du dispositif de mesure (3, 4) et qui peuvent être déclenchés par un des signaux de balayage de la première paire de signaux de balayage, afin de maintenir une valeur de détection (unk) respective de la somme des tensions des phases d'enroulement,
un premier élément de sommation (7 ; 11 ; 15) pour former la différence entre les deux valeurs de détection maintenues dans les dispositifs de maintien de la première paire de dispositifs de maintien, et
un premier dispositif de maintien (8 ; 12 ; 16) supplémentaire dont l'entrée est reliée à la sortie d'un premier élément de sommation et qui peut être déclenchée par le plus tardif des deux signaux de balayage de la première paire de signaux de balayage, afin de maintenir la différence des valeurs de détection,
le dispositif de calcul donnant le signal de sortie du dispositif de maintien supplémentaire.

**17.** Dispositif selon la revendication 15, dans lequel

le dispositif de contrôle commande l'onduleur pour chacun des deux ou trois états nuls survenant successivement pendant la même durée, en deux états de commutation, d'une paire d'états de commutation possibles se compensant dans leur action, et

le générateur de signal de balayage génère deux ou trois paires de signaux de balayage respectivement synchronisés avec les deux états de commutation de la paire d'états de commutation correspondante et qui comprend, en outre :

deux ou trois paires de dispositifs de maintien avec chacune des premier et deuxième dispositifs de maintien (5, 6 ; 9, 10 ; 13, 14) dont les entrées sont reliées à la sortie du dispositif de mesure (3, 4) et qui peuvent être déclenchées chacune par un des signaux de balayage de l'une correspondante des deux ou trois paires de signaux de balayage, afin de maintenir une valeur de détection ($u_{nk}$) de la somme des tensions des phases d'enroulement,
deux ou trois éléments de sommation (7, 11, 15) pour la constitution de la différence entre les deux valeurs de détection maintenues dans les dispositifs de balayage et de maintien d'une paire de dispositifs de maintien respective,
deux ou trois dispositifs de maintien supplémentaires (8, 12, 16) dont chaque entrée est reliée à la sortie de l'élément de sommation (7, 11, 15) correspondant et qui peuvent être déclenchés par le plus tardif des deux signaux de balayage d'une paire de signaux de balayage respectifs, afin de maintenir la différence respective de valeurs de détection ($u_{na}$, $u_{nb}$, $u_{nc}$),
un dispositif de transformation (22) pour combiner les différences de valeurs de détection maintenues dans les deux ou trois dispositifs de maintien (8, 12, 16) en un phaseur de rotation $u_n$ selon la formule :

$u_n = (u_{na} + j(u_{na} + 2\ u_{nb})/\sqrt{3}$ dans le cas de deux dispositifs de maintien supplémentaires, ou
$u_u = 2/3\ (u_{na} + au_{nb} + a^2u_{nc})$ dans le cas de trois dispositifs de maintien supplémentaires,
$u_{na}$, $u_{nb}$, $u_{nc}$ étant les signaux maintenus par les dispositifs de maintien supplémentaires (8, 12, 16) et $a = \exp(j2\pi/3)$, et

un dispositif de maintien de sortie (23) dont l'entrée est reliée à la sortie du dispositif de transformation (22) et qui peut être déclenché par le plus tardif des signaux de balayage de toutes les paires de signaux de balayage, afin de maintenir le signal de sortie du dispositif de transformation (22),
le dispositif de calcul donnant le signal de sortie du dispositif de maintien de sortie (23).

**18.** Dispositif selon l'une des revendications 15 à 17, comprenant :

un générateur de signaux de balayage générant deux ou trois signaux de balayage synchronisés avec deux ou trois états de commutation sélectionnés,
deux ou trois premiers dispositifs de maintien (19-21) pouvant être déclenchés par un des signaux de balayage respectifs,
un dispositif de commutation (18) par l'intermédiaire duquel les entrées des deux ou trois premiers dispositifs de maintien (19-21) peuvent être reliées soit directement soit par l'intermédiaire d'un inverseur (17) à la sortie du dispositif de mesure (3, 4), le dispositif de commutation pouvant être commuté en fonction de l'état de commutation respectif de l'onduleur (2),
un dispositif de transformation (22) pour combiner les valeurs de détection maintenues dans les deux ou trois premiers dispositifs de maintien (19-21) en un phaseur de rotation $u_n$ selon la formule :

$u_n = (u_{na} + j(u_{na} + 2\ u_{nb})/\sqrt{3}$ dans le cas de deux premiers dispositifs de maintien supplémentaires, ou
$u_n = 2/3\ (u_{na} + au_{nb} + a^2u_{nc})$ dans le cas de trois premiers dispositifs de maintien supplémentaires,

$u_{na}$, $u_{nb}$, $u_{nc}$ étant les signaux maintenus par les premiers dispositifs de maintien supplémentaires (8, 12, 16) et a= exp(j2π/3), et

un dispositif de maintien de sortie (23) dont l'entrée est reliée à la sortie du dispositif de transformation (22) et qui peut être déclenché par le plus tardif des deux ou trois signaux de balayage, afin de maintenir le signal de sortie du dispositif de transformation (22),
le dispositif de calcul donnant le signal de sortie du dispositif de maintien de sortie (23).

19. Dispositif selon l'une des revendications 15 à 18, dans lequel, à l'exception du dispositif de mesure et de l'onduleur, tous les éléments fonctionnent comme un micro-ordinateur programmé.

Strang $a$

a)

$B_{max}$

$B_a(\alpha)$ 0

$\pi$

$2\pi$

b)

$\alpha \longrightarrow$

Rotorspule in
Stellung $\delta = \pi/2$

0

$2\pi$

c)

$\pi$

$\delta \longrightarrow$

$M_{S1}$

0

$\pi$

$2\pi$

d)

$L_\sigma$

0

$\pi$

$2\pi$

e)

$\delta \longrightarrow$

Fig. 1

Fig. 2

Fig. 3

Fig. 4

Fig. 5

Fig. 6

Fig. 7

Fig. 8

Fig. 9